# EUROPEAN PATENT APPLICATION

(11) **EP 4 832 645 A1**
(43) Date of publication of application: **28.10.2026**
(21) Application number: 24906249.8
(22) Date of filing: 13.12.2024
(51) Int. Cl.: H04W 74/0833

(54) **RANDOM ACCESS AND COMMUNICATION METHODS AND APPARATUSES, AND DEVICE**

(30) Priority: 19.12.2023 CN 202311764463
(71) Applicant: Vivo Mobile Communication Co., Ltd., Dongguan, Guangdong 523863 (CN)
(72) Inventor: JIANG, Lu, Dongguan, Guangdong 523863 (CN); LI, Gen, Dongguan, Guangdong 523863 (CN); PAN, Xueming, Dongguan, Guangdong 523863 (CN)
(74) Representative: Studio Torta S.p.A.
(86) International application number: PCT/CN2024/139113
(87) International publication number: WO 2025/130768

(57) **Abstract**

The present application discloses random access and communication methods and apparatuses, and a device, and pertains to the field of communication technologies. The random access method disclosed in the embodiments of the present application includes: receiving, by UE, first information about a second access object group transmitted by a network-side device via a first access object, where the second access object group includes one or more second access objects different from the first access object, and the first information includes system information block SIB of the second access object; and selecting, by the UE according to the first information and a first rule, a target access object for performing a first operation from the first access object and the second access object group, where the first operation includes camping or random access, and the access object includes one of a carrier, a cell, and a bandwidth part BWP.

## Description

### CROSS-REFERENCE TO RELATED APPLICATIONS

The present application claims priority to a Chinese patent application filed with the China National Intellectual Property Administration on December 19, 2023, with application number 202311764463.0 and entitled "RANDOM ACCESS AND COMMUNICATION METHODS AND APPARATUSES, AND DEVICE", which is incorporated herein by reference in its entirety.

### TECHNICAL FIELD

The present application pertains to the field of communication technologies, and specifically relates to random access and communication methods and apparatuses, and a device.

### BACKGROUND

To enhance the capacity of the network side, the network side introduces multiple access objects (such as multi-carrier (multi-carrier)/multi-cell). Currently, in a multi-carrier scenario, there exists two random access schemes. In a first scheme, each carrier is independent, and a base station transmits one or more items of information including a synchronization signal or physical broadcast channel block (Synchronization Signal / Physical Broadcast Channel block, SSB), system information block 1 (System Information Block 1, SIB1), and paging on each carrier. A user equipment (User Equipment, UE) may select any carrier to perform random access according to the information. However, in this random access scheme, since all carriers keep transmitting signals, which leads to high energy consumption of the network side. In a second scheme for a carrier aggregation (Carrier Aggregation, CA) scenario, a base station transmits SIB 1 and paging only on a primary carrier (or called primary cell (PCell)). Accordingly, a UE can perform random access only on the primary carrier/primary cell (PCell). The second random access scheme can reduce the energy consumption of the network side, but congestion of the network side is caused since all UEs perform random access on the primary carrier, and a probability of random access failure is increased accordingly.

Furthermore, to avoid problems that exist in these two random access schemes, the network side differentiates carriers. Some carriers normally transmit at least one of information including SSB, SIB1, and paging, and other carriers do not transmit the information. For a carrier that does not transmit the information, a UE may implement random access by referring to a carrier that transmits the information. However, the reference needs to meet certain conditions. For example, carriers that refer to each other shall be intra-band (intra-band) carriers/intra-band cells, or carriers that refer to each other shall be co-located carriers/co-located cells (co-located Cells). If these conditions are not met, a carrier that does not transmit the above information still needs to perform normal transmission, which results in still high energy consumption of the network side.

Therefore, in a multi-access object scenario, how to implement random access for a UE to save energy for the network side, and ensure capacity of the network side to a maximum extent remains an urgent technical problem to be solved.

### SUMMARY

Embodiments of the present application provide random access and communication methods and apparatuses, and a device, so as to ensure capacity of the network side to a maximum extent while saving energy for the network side.

According to a first aspect, a random access method is provided, and the method includes:
receiving, by UE, first information about a second access object group transmitted by a network-side device via a first access object, where the second access object group includes one or more second access objects different from the first access object, and the first information includes system information block SIB of the second access object; and
selecting, by the UE according to the first information and a first rule, a target access object for performing a first operation from the first access object and the second access object group, where the first operation includes camping or random access, and the access object includes one of a carrier, a cell, and a bandwidth part BWP.

According to a second aspect, a communication method is provided, and the method includes:
transmitting, by a network-side device, first information about a second access object group to UE via a first access object, where the second access object group includes one or more second access objects different from the first access object, the first information includes system information block SIB of the second access object, and the first information is used for selection, by the UE, of a target access object for performing a first operation, where the first operation includes camping or random access, and the access object includes one of a carrier, a cell, and a bandwidth part BWP.

According to a third aspect, a random access apparatus for a multi-carrier scenario is provided, and the apparatus includes:
an information receiving module, configured to receive first information about a second access object group transmitted by a network-side device via a first access object, where the second access object group includes one or more second access objects different from the first access object, and the first information includes system information block SIB of the second access object; and
an access object selection module, configured to select, according to the first information and a first rule, a target access object for performing a first operation from the first access object and the second access object group, where the first operation includes camping or random access, and the access object includes one of a carrier, a cell, and a bandwidth part BWP.

According to a fourth aspect, a communication apparatus is provided, and the apparatus includes:
an information transmitting module, configured to transmit first information about a second access object group to UE via a first access object, where the second access object group includes one or more second access objects different from the first access object, the first information includes system information block SIB of the second access object, and the first information is used for selection, by the UE, of a target access object for performing a first operation, where the first operation includes camping or random access, and the access object includes one of a carrier, a cell, and a bandwidth part BWP.

According to a fifth aspect, UE is provided, and the UE includes a processor and a memory, where the memory stores a program or instructions executable on the processor, and the program or instructions, when executed by the processor, implement the steps of the method according to the first aspect.

According to a sixth aspect, UE is provided, including a processor and a communication interface, where the communication interface is configured to receive first information about a second access object group transmitted by a network-side device via a first access object, where the second access object group includes one or more second access objects different from the first access object, and the first information includes system information block SIB of the second access object; and the processor is configured to select, according to the first information and a first rule, a target access object for performing a first operation from the first access object and the second access object group, where the first operation includes camping or random access.

According to a seventh aspect, a network-side device is provided, and the network-side device includes a processor and a memory, where the memory stores a program or instructions executable on the processor, and the program or instructions, when executed by the processor, implement the steps of the method according to the second aspect.

According to an eighth aspect, a network-side device is provided, including a processor and a communication interface, where the communication interface is configured to transmit first information about a second access object group to UE via a first access object, where the second access object group includes one or more second access objects different from the first access object, the first information includes system information block SIB of the second access object, and the first information is used for selection, by the UE, of a target access object for performing a first operation, where the first operation includes camping or random access.

According to a ninth aspect, a communication system is provided and includes UE and a network-side device, where the UE is configured to perform the steps of the random access method according to the first aspect, and the network-side device is configured to perform the steps of the communication method according to the second aspect.

According to a tenth aspect, a readable storage medium is provided, where the readable storage medium stores a program or instructions, and the program or instructions, when executed by a processor, implement the steps of the method according to the first aspect, or implement the steps of the method according to the second aspect.

According to an eleventh aspect, a chip is provided, and the chip includes a processor and a communication interface, where the communication interface is coupled with the processor, the processor is configured to run a program or instructions to implement the method according to the first aspect, or to implement the method according to the second aspect.

According to a twelfth aspect, a computer program/program product is provided, the computer program/program product is stored in a storage medium, and the computer program/program product is executed by at least one processor to implement the steps of the method according to the first aspect or the second aspect.

In the embodiments of the present application, the network-side device provides first information about a second access object group to the UE via a first access object, where the first information includes system information block SIB of the second access object, so that the UE may select, according to the first information and a first rule, a target access object for camping or random access from the first access object and the second access object group, without a need for the second access object to continuously transmit information such as SSB and SIB. Therefore, the capacity of the network side can be ensured to a maximum extent while energy saving is performed for the network side.

### BRIEF DESCRIPTION OF DRAWINGS

FIG. 1 is a block diagram of a wireless communication system according to an embodiment of the present application.
FIG. 2 is a schematic flowchart of a random access method according to an embodiment of the present application.
FIG. 3 is a schematic flowchart of a random access method according to another embodiment of the present application.
FIG. 4 is a schematic flowchart of a random access method according to another embodiment of the present application.
FIG. 5 is a schematic flowchart of a random access method according to another embodiment of the present application.
FIG. 6 is a schematic diagram of WUS resource configuration according to an embodiment of the present application.
FIG. 7 is a schematic diagram of WUS resource configuration according to another embodiment of the present application.
FIG. 8 is a schematic diagram of WUS resource configuration according to another embodiment of the present application.
FIG. 9 is a schematic flowchart of a communication method according to an embodiment of the present application.
FIG. 10 is a schematic structural diagram of a random access apparatus according to an embodiment of the present application.
FIG. 11 is a schematic structural diagram of a random access apparatus according to another embodiment of the present application.
FIG. 12 is a schematic structural diagram of a random access apparatus according to another embodiment of the present application.
FIG. 13 is a schematic structural diagram of a random access apparatus according to another embodiment of the present application.
FIG. 14 is a schematic structural diagram of a communication apparatus according to an embodiment of the present application.
FIG. 15 is a schematic structural diagram of a communication apparatus according to the present application.
FIG. 16 is a schematic diagram of a hardware structure of UE according to an embodiment of the present application.
FIG. 17 is a schematic diagram of a hardware structure of a network-side device according to an embodiment of the present application.

### DESCRIPTION OF EMBODIMENTS

The following clearly describes the technical solutions in the embodiments of the present application with reference to the accompanying drawings in the embodiments of the present application. Apparently, the described embodiments are only some rather than all of the embodiments of the present application. All other embodiments obtained by persons of ordinary skill in the art based on the embodiments of the present application shall fall within the protection scope of the present application.

The terms "first", "second", and the like in this specification and claims of the present application are used to distinguish between similar objects rather than to describe a specific order or sequence. It should be understood that terms used in this way are interchangeable in appropriate circumstances so that the embodiments of the present application can be implemented in other orders than the order illustrated or described herein. In addition, "first" and "second" are usually used to distinguish objects of a same type, and do not restrict a quantity of objects. For example, the first access object may be one or more than one. In addition, "and/or" in the specification and claims represents at least one of connected objects, and the character "/" generally indicates that the associated objects have an "or" relationship.

It should be noted that technologies described in the embodiments of the present application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the present application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communication system.

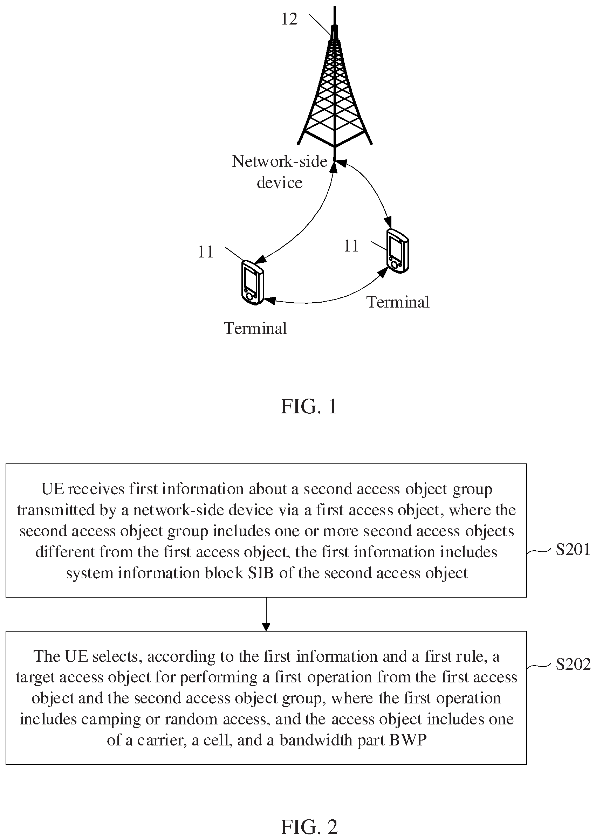

FIG. 1 is a block diagram of a wireless communication system to which the embodiments of the present application are applicable. The wireless communication system includes UE 11 and a network-side device 12. The UE 11 may be UE-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the embodiments of the present application do not impose any limitation on a specific type of the UE 11. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or other appropriate terms in the field, provided that the same technical effect is achieved. The base station is not limited to specific technical terms. It should be noted that in the embodiments of the present application, the base station in the NR system is used as an example for introduction, and the specific type of the base station is not limited.

To ensure capacity of the network side to a maximum extent while saving energy for the network side, the embodiments of the present application provide a random access method and apparatus and UE, as well as a communication method and apparatus and a network-side device. Details are described below with reference to the accompanying drawings.

First, a random access method provided in the embodiments of the present application is described.

As shown in FIG. 2, a random access method provided in an embodiment of the present application may include the following steps:
Step 201: UE receives first information about a second access object group transmitted by a network-side device via a first access object, where the second access object group includes one or more second access objects different from the first access object, the first information includes system information block SIB of the second access object, and the access object includes one of a carrier, a cell, and a bandwidth part BWP.

The access object may include one of a carrier (carrier), a cell (cell), and a bandwidth part (Bandwidth Part, BWP). The random access method provided in this embodiment of the present application is applied to a multi-access object scenario, and the following mainly uses a multi-carrier scenario as an example for description.

In an implementation, in a multi-carrier scenario, the first access object may be an anchor carrier (anchor carrier), and the second access object may be a non-anchor carrier (non-anchor carrier). On the anchor carrier, the UE may obtain system information (system information) of the anchor carrier and necessary system information (necessary system information) of other non-anchor carriers. The UE may perform at least one of random access channel (Random Access Channel, RACH), data transmission, and data reception on any anchor carrier and non-anchor carrier based on the system information obtained from the anchor carrier.

In another implementation, in a multi-carrier scenario, the first access object may be a carrier that normally transmits an SSB, and the second access object may be a carrier that does not transmit an SSB (SSB-less carrier), or the second access object is a carrier that supports on-demand transmission of SSB (on-demand SSB carrier).

In this embodiment of the present application, the SSB includes at least one of a synchronization signal block (Synchronization Signal Block, SSB) and a physical broadcast channel block (Physical Broadcast Channel block).

The random access method provided in this embodiment of the present application is applicable to scenarios where a network-side device configures system information block (System Information Block, SIB) SIB of the second access object on a first access object (that is, the first information includes the SIB of the second access object). These scenarios may include the following:
Scenario 0: The first access object is configured with SIB of all second access objects in the second access object group, none of the second access objects in the second access object group transmit a SIB, and all of them normally transmit an SSB and perform normal RACH monitoring (monitoring).
Scenario 1: The first access object is configured with SIB of all second access objects in the second access object group, none of the second access objects in the second access object group transmit a SIB, and all of them either do not transmit an SSB or transmit energy-saving SSB, take the first access object as a reference, and perform normal RACH monitoring.
Scenario 2: The first access object is configured with SIB of all second access objects in the second access object group and WUS configuration for triggering SSB transmission, none of the second access objects in the second access object group transmit a SIB, nor do they transmit an SSB, and all of the them perform normal RACH monitoring.
Scenario 3: The first access object is configured with SIB of all second access objects in the second access object group and WUS configuration for triggering RACH monitoring, none of the second access objects in the second access object group transmit a SIB, each of them transmits or does not transmit an SSB (with the first access object as a reference carrier), and none of them perform normal RACH monitoring.
Scenario 4: The first access object is configured with SIB of all second access objects in the second access object group and WUS configuration for triggering SSB transmission and RACH monitoring, none of the second access objects in the second access object group transmit a SIB, nor do they transmit an SSB or perform normal RACH monitoring.

The first information may be transmitted by the first access object via a broadcast message; or the first information is by default the same as corresponding information of the first access object.

System information of the second access object included in the first information includes at least one of the following:
all SIB or part of SIB of the second access object, where the part of SIB may include at least one of public land mobile network (Public Land Mobile Network, PLMN) information, configuration information related to a cell selection (Cell selection) criterion, configuration information related to a cell reselection (Cell reselection) criterion, and cell bar (Cell bar) information; and
system information block 1 (System Information Block 1, SIB1) status information of the second access object, where the SIB1 status information including at least one of no transmission of SIB 1 and SIB 1 carried by system information of the first access object.

The first information corresponds to at least one second access object in the second access object group, and the first information further includes at least one of the following:
(1) Wake-up signal (Wake-up Signal, WUS) configuration information for triggering the at least one second access object to transmit an SSB, or WUS configuration information for triggering SSB adaptation (SSB adaptation) of the at least one second access object.
(2) WUS configuration information for triggering RACH monitoring of the at least one second access object, or WUS configuration information for triggering adaptation of RACH monitoring (RACH adaptation) of the at least one second access object.
(3) Related configuration information of SSB currently transmitted by the at least one second access object, specifically including at least one of the following:
   whether the at least one second access object is transmitting SSB;
   at least one of a frequency point of SSB being transmitted by the at least one second access object, an SSB transmission period, and the number of SSBs in one transmission period; and
   a transmission mode of SSB being transmitted by the at least one second access object, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a transmission mode with no time-domain gap (gap) between multiple SSBs.
(4) Related configuration information of a current RACH monitoring behavior of the at least one second access object, specifically including at least one of the following:
   whether the at least one second access object performs RACH monitoring;
   at least one of a transmission period of RACH being monitored by the at least one second access object, the number of RACHs in one transmission period, RACH frequency-domain resource configuration information, and RACH time-domain resource configuration information; and
   a monitoring mode for RACH monitoring performed by the at least one second access object, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), the compact monitoring mode may be a monitoring mode with no time-domain gap (gap) between multiple ROs, and RO is short for physical random access channel occasion (PRACH Occasion).
(5) Related configuration information of SSB transmitted upon successful WUS triggering, specifically including at least one of the following:
   upon successful WUS triggering, at least one of a frequency point of SSB transmitted by the at least one second access object, an SSB transmission period, and the number of SSBs in one transmission period;
   upon successful WUS triggering, a monitoring window for SSB transmitted by the at least one second access object, meaning that the UE monitors SSB within the monitoring window;
   upon successful WUS triggering, at least one time-domain resource index or at least one position of a time-domain resource where the at least one second access object actually transmits an SSB;
   upon successful WUS triggering, at least one of a transmission duration of SSB transmitted by the at least one second access object, the number of SSB transmissions, and the number of SSB transmission periods;
   upon successful WUS triggering, a relative relationship between SSB transmitted by the at least one second access object and SSB transmitted by the first access object in at least one of time domain, frequency domain, and spatial domain;
   upon successful WUS triggering, a time-domain resource position of a first SSB transmitted by the at least one second access object, for example, transmission in a nearest SSB period after X slots/symbols after a transmission time of the trigger signal (WUS); and
   upon successful WUS triggering, a transmission mode of SSB transmitted by the at least one second access object, the transmission mode including one of a normal transmission mode, an energy-saving transmission mode (for example, transmitting only PSS and SSS), a compact transmission mode (for example, no time-domain gap between multiple SSBs), a long-period transmission mode (With a relatively long SSB period), and an on-demand (on-demand) transmission mode.
(6) Related configuration information of RACH monitoring upon successful WUS triggering, specifically including:
   upon successful WUS triggering, at least one of a period for RACH monitoring performed by the at least one second access object, the number of RACHs to be monitored, monitored RACH frequency-domain resource configuration information, monitored RACH time-domain resource configuration information, and a monitoring mode for RACH monitoring, where the monitoring mode includes one of a normal monitoring mode, a simplified monitoring mode (for example, reduced RO opportunity), a compact monitoring mode (no time-domain gap between multiple ROs), and an on-demand monitoring mode.
(7) Feature information of the at least one second access object, specifically including at least one of the following:
   identification information of the at least one second access object;
   whether the at least one second access object can use the first access object as a reference access object;
   whether the at least one second access object is being co-located (co-located) with the first access object;
   whether the at least one second access object and the first access object belong to the same timing advance group (Timing Advance Group, TAG);
   whether the at least one second access object has a quasi co-location (Quasi Co Location, QCL) relationship with the first access object;
   a reference access object of the at least one second access object;
   an access object co-located with the at least one second access object;
   an access object belonging to the same TAG as the at least one second access object;
   an access object having a QCL relationship with the at least one second access object;
   whether the at least one second access object is in a bar bar state;
   a priority of the at least one second access object when the UE performs random access channel selection;
   whether the at least one second access object is set to a bar state for a first type of UE, where the first type includes at least one of reduced capability (Reduced Capability, Redcap), non-terrestrial network (Non-Terrestrial Network, NTN), and network energy saving (Network Energy Saving, NES) capability;
   a feature value N of a UE ID allowed to perform random access on the at least one second access object, for example, a UE with UE ID mod number of carriers = N may perform random access on the carrier;
   whether the at least one second access object supports UE camping;
   whether the at least one second access object is a suitable cell (suitable cell); and
   whether the at least one second access object supports cell selection and/or cell reselection.

The WUS configuration information included in the first information may include at least one of the following:
(1) Synchronization reference configuration information of WUS, specifically including at least one of the following:
   at least one of SSB, channel state information-reference signal (Channel State Information-Reference Signal, CSI-RS), and tracking reference signal (tracking reference signal, TRS) of the first access object; and
   GPS timing (GPS timing).
(2) Resource configuration information of WUS, specifically including at least one of the following:
   time-domain resource information;
   frequency domain resource information; and
   signal sequence configuration information, for example, preamble grouping, which may specifically indicate a preamble grouping index indicating that the group of preambles is used to trigger SSB of the at least one second access object.
(3) Power configuration information of WUS, specifically including at least one of the following:
   initial signal power; and
   signal power ramping step.
(4) Repetition transmission configuration information of WUS, specifically including at least one of the following:
   a repetition count for a single signal transmission; and
   a maximum repetition count for channel transmission.
(5) Spatial-domain parameter configuration information of WUS, specifically including at least one of the following:
   a correspondence between the WUS and an SSB of the first access object;
   a correspondence between the WUS and an SSB of the at least one second access object; and
   a correspondence between the WUS and an SSB of the second access object group.
(6) Transmission timer (timer) configuration information of WUS. The timer is used to avoid excessively frequent WUS transmission. Generally, the timer is started after WUS transmission, and repeated WUS transmission is not allowed before the timer expires.

The form of the WUS signal includes at least one of the following:
a RACH;
Msg1;
a preamble (preamble) sequence;
a sounding reference signal (Sounding Reference Signal, SRS); and
a physical uplink control channel (Physical Uplink Control Channel, PUCCH).

The configuration manner of the resource configuration information of the WUS includes at least one of the following:
configuring a signal resource list in the first information, each element of the signal resource list corresponding one-to-one to an index of the second access object or the second access object group, one element in the signal resource list including one or more resources;
configuring a signal resource list in the first information, each element of the signal resource list explicitly corresponding to an index of the second access object or the second access object group;
configuring a candidate resource set in the first information, one or more resources in the candidate resource set corresponding to one resource number, one resource number corresponding to an index of one second access object or one second access object group, the resource number being determined according to at least one of time domain, frequency domain, and spatial domain; and
configuring one or more signal resources for the second access object or the second access object group in the first information.

The signal resources configured by the resource configuration information of the WUS include at least one of the following:
time-frequency resources that are the same as time-frequency resources of a common RACH on the first access object or the second access object group, that is, sharing the same time-frequency resources with the common RACH on the first access object;
time-frequency resources that are time-frequency resources of a dedicated RACH specially used for triggering SSB transmission and/or RACH monitoring on the first access object or the second access object group, where the time-frequency resources of the dedicated RACH may be completely different time-frequency resources from the common RACH on the first access object, or may be a part of the time-frequency resources of the common RACH on the first access object; and
time-frequency resources that are time-frequency resources of a dedicated SRS/PUCCH used for triggering SSB transmission and/or RACH monitoring on the first access object or the second access object group.

The grouping manner of the second access object group includes at least one of the following:
configured by a network-side device; and
specified by a protocol.

The grouping rule of the second access object group includes at least one of the following:
second access objects in the same band (band) form one group;
second access objects in the same band range form one group;
second access objects that are the same in at least one of initial BWP (Initial BWP), active BWP (active BWP), SSB, and SCS form one group;
second access objects with the same transmission mode form one group, where the transmission mode is related to at least one of the following: whether to transmit an SSB, whether to perform RACH monitoring, and whether to support on-demand SSB (on-demand SSB) transmission;
co-located second access objects form one group; and
second access objects with consistent SSB transmission periods form one group.

Step 202: Select, according to the first information and a first rule, a target access object for performing a first operation from the first access object and the second access object group, where the first operation includes camping or random access.

The first rule may be related to at least one of the following:
one or more access objects for the UE to perform random access, as indicated or configured by a network-side device;
an access object for the UE to perform random access being the first access object by default;
bar status information of the second access object;
an index value of the second access object;
a center frequency of the second access object;
a subcarrier spacing (SubCarrier Spacing, SCS) of the second access object;
an identifier of the second access object;
a frequency interval between the second access object and the first access object;
whether the second access object performs normal RACH monitoring;
whether the second access object normally transmits an SSB;
whether the second access object supports normal RACH monitoring and normal transmission of SSB;
the number of WUS transmissions to be transmitted to the second access object;
a priority of the second access object;
a signal strength measurement value of a reference signal of the second access object, the signal strength including at least one of reference signal received power (Reference Signal Received Power, RSRP) and signal to interference plus noise ratio (Signal to Interference plus Noise Ratio, SINR);
a randomly generated index of an access object;
a weight value of the second access object;
a randomly generated weight value of an access object;
whether the first access object is a suitable cell; and
whether the second access object is a suitable cell.

The priority of the second access object may be explicitly indicated by a network-side device; or the priority of the second access object is related to at least one of the following:
(a) A transmission mode of the second access object, the transmission mode including one of the following: whether to normally transmit an SSB, whether to support on-demand SSB transmission, and whether to normally monitor RACH, for example, a relationship between the priority of the second access object and the transmission mode may be:
   Priority 0 (Priority0): normal SSB transmission and normal RACH monitoring;
   Priority 1 (Priority1): no normal SSB transmission (with reference to SSB of the first access object) and normal RACH monitoring;
   Priority 2 (Priority2): on-demand SSB (on-demand SSB) transmission and normal RACH monitoring;
   Priority 3 (Priority3): normal SSB transmission and no normal RACH monitoring;
   Priority 4 (Priority4): no normal SSB transmission (with reference to SSB of the first access object) and no normal RACH monitoring; and
   Priority 5 (Priority5): on-demand SSB (on-demand SSB) transmission and no normal RACH monitoring.
   It should be noted that in the above example, a smaller priority value indicates a higher priority.
(b) A frequency band interval between the second access object and the first access object;
(c) The number of the second access object.

Two examples are provided below to illustrate how to select, according to the first information and the first rule, a target access object for performing a first operation from the first access object and the second access object group in step 202. Other examples will be involved in the specific embodiments below and are not repeated herein, which will be described in detail below.

### First example

The selecting, according to the first information and the first rule, a target access object for performing a first operation from the first access object and the second access object group may include:
determining whether the first access object is a suitable cell;
selecting the first access object as the target access object when the first access object is a suitable cell; and
performing a first step or a second step when the first access object is not a suitable cell; where
the first step includes:
   determining whether at least one second access object in the second access object group is a suitable cell, according to a reference signal measurement result corresponding to the at least one second access object and part SIB or all of SIB of the at least one second access object included in the first information; and
   selecting, according to the first rule, one suitable cell as the target access object for performing the first operation from the at least one second access object in a case that one or more second access objects among the at least one second access object are suitable cells; and
   the second step includes: and
   ignoring the second access object, and searching for another suitable cell as the target access object for performing the first operation.

Further, the searching for another suitable cell as the target access object for performing the first operation may include:
searching for a suitable cell as the target access object for performing the first operation from one or more second access objects in the second access object group; and
searching for a suitable cell as the target access object for performing the first operation from one or more third access objects in a third access object group, where the third access object group includes access objects in the second access object group that satisfy a third condition.

The third condition may include at least one of the following:
using the first access object as a reference;
being co-located with the first access object; and
being consecutive access objects on a same band as the first access object.

### Second example

The selecting, according to the first information and the first rule, a target access object for performing a first operation from the first access object and the second access object group may include:
determining whether the first access object is a suitable cell, according to a measurement result of SSB transmitted by the first access object and SIB of the first access object;
determining whether at least one second access object in the second access object group is a suitable cell, according to a reference signal measurement result corresponding to the at least one second access object and part SIB or all of SIB of the at least one second access object included in the first information; and
selecting, according to the first rule, one suitable cell as the target access object for performing the first operation from the first access object and the at least one second access object in a case that the first access object is a suitable cell and one or more second access objects among the at least one second access object are suitable cells.

In this embodiment of the present application, one reference signal corresponding to one second access object may include at least one of reference signals such as SSB, CSI-RS, DRS, and TRS. When the reference signal is SSB, for one second access object, if SSB transmission is performed on the second access object, SSB measurement is directly performed on the second access object to obtain an SSB measurement result; if no SSB transmission is performed on the second access object, an SSB measurement result transmitted on a fourth access object is used as the SSB measurement result of the second access object, where the fourth access object may include one of a reference access object configured for the second access object, an access object co-located with the second access object, and an access object that is located on the same band as the second access object and consecutive to each other; or if no SSB transmission is performed on the second access object, an SSB measurement result transmitted by the second access object upon successful WUS triggering is used as the SSB measurement result of the second access object.

In the random access method provided in the embodiment shown in FIG. 2, since the network-side device may provide first information about a second access object group to UE via a first access object, where the first information includes system information block SIB of the second access object, and the UE may select, according to the first information and a first rule, a target access object for camping or random access from the first access object and the second access object group. The second access object does not need to continuously transmit an SSB, SIB, and other information, but transmits an SSB or performs RACH monitoring on demand. Therefore, the capacity of the network side can be ensured to a maximum extent while energy saving is performed for the network side.

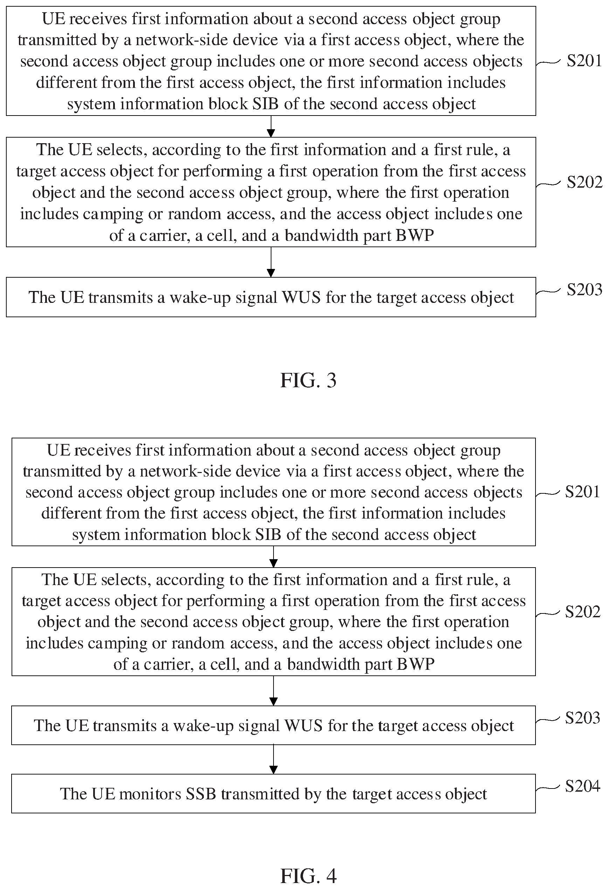

Optionally, the target access object belongs to the second access object group. The first information includes wake-up signal WUS configuration information for triggering the at least one second access object to transmit an SSB, or WUS configuration information for triggering SSB adaptation of the at least one second access object, and the first information includes WUS configuration information for triggering random access channel RACH monitoring of the at least one second access object, or WUS configuration information for triggering RACH monitoring adaptation of the at least one second access object. After step 202 and before performing the first operation on the target access object, as shown in FIG. 3, the random access method provided in this embodiment of the present application may further include the following step.

Step 203: The UE transmits a wake-up signal WUS for the target access object, where the WUS is used for triggering at least one of transmission of SSB and monitoring of RACH by the target access object.

In one example, the transmitting, by the UE, a WUS for the target access object includes: transmitting, by the UE, a WUS for the target access object in a case that a first condition is satisfied.

The first condition may include at least one of the following:
(1) the first access object is not a suitable cell;
(2) the target access object is a suitable cell;
(3) intra-frequency (intra-frequency) or inter-frequency (inter-frequency) measurement is performed on the target access object;
(4) the target access object is in a first energy-saving state, where the first energy-saving state includes at least one of no SSB transmission, no SIB transmission, no RACH monitoring, an energy-saving SSB (such as sparse SSB) transmission, an energy-saving SIB (such as sparse SIB) transmission, and energy-saving RACH monitoring (such as sparse RACH monitoring), and the energy-saving SSB includes one of a light SSB, a simplified SSB, a sparse SSB, and a long-period SSB;
(5) the UE is sensitive to access delay; and
(6) the UE is in a process of recovery from a link failure.

In another example, before the transmitting a WUS for the target access object, the method may further include: assuming that the target access object is in a second energy-saving state.

The second energy-saving state may include at least one of the following:
no SIB transmission, normal SSB transmission, and normal RACH monitoring;
no SIB transmission, no SSB transmission or energy-saving SSB transmission (for example, simplified SSB or sparse SSB), with the first access object as a reference, and normal RACH monitoring;
no SIB transmission, normal SSB transmission, and no normal RACH monitoring; and
no SIB transmission, no SSB transmission or energy-saving SSB transmission (for example, simplified SSB or sparse SSB), and no normal RACH monitoring.

In the first example, the transmitting, by the UE, a WUS for the target access object may include: transmitting, by the UE, one WUS for the target access object, where the WUS may be used for two purposes: triggering the target access object to transmit an SSB, and triggering the target access object to monitor RACH.

In the second example, the transmitting, by the UE, a WUS for the target access object may include: transmitting, by the UE, a first WUS for the target access object, where the first WUS is used for triggering the target access object to transmit an SSB; and transmitting, by the UE, a second WUS for the target access object, where the second WUS is used for triggering the target access object to monitor RACH.

Exemplarily, the transmitting, by the UE, a second WUS for the target access object (a time point at which the second WUS is transmitted) includes one of the following:
starting, by the UE, to transmit a second WUS for the target access object after Z slots/symbols/milliseconds from transmitting the first WUS;
starting, by the UE, to transmit a second WUS for the target access object after X slots/symbols/milliseconds from receiving feedback for the first WUS;
starting, by the UE, to transmit a second WUS for the target access object after Y slots/symbols/milliseconds from receiving a first SSB transmitted after successfully triggering the target access object;
transmitting, by the UE, a second WUS for the target access object when a transmission count of the first WUS reaches a maximum value; and
starting a first timer after transmitting the first WUS, and transmitting, by the UE, a second WUS for the target access object after the first timer expires.

In the random access method provided in the embodiment shown in FIG. 3, the UE may trigger the second access object to transmit an SSB or perform RACH monitoring on demand (on-demand), instead of continuously transmitting SSB, continuously performing RACH monitoring, always not transmitting SSB, or always not performing RACH monitoring. Therefore, the capacity of the network side can be ensured to a maximum extent while energy saving is performed for the network-side device.

Optionally, when the WUS is used for triggering SSB transmission, as shown in FIG. 4, the random access method provided in the embodiment of the present application may further include:
monitoring, by the UE, SSB transmitted by the target access object.

It should be noted that the UE may monitor the position of SSB regardless of whether the UE transmits one WUS or two WUSs (the first WUS and the second WUS) for the target access object. Specifically, when the UE transmits one WUS for the target access object, the UE monitors the position of SSB after transmitting the WUS; and when the UE transmits two WUSs for the target access object (the first WUS and the second WUS), the UE may monitor the position of SSB after transmission of the first WUS.

Specifically, the monitoring, by the UE, SSB transmitted by the target access object (a time point at which SSB transmitted by the target access object is monitored) may include one of the following:
starting a third timer after transmission of the WUS, and starting, by the UE, to monitor SSB transmitted by the target access object after the third timer expires;
starting, by the UE, to monitor SSB transmitted by the target access object after C slots/symbols/milliseconds after transmission of the WUS;
starting, by the UE, to monitor SSB transmitted by the target access object in a next slot after transmission of the WUS; and
monitoring, by the UE, SSB transmitted by the target access object within an SSB monitoring window configured in the first information.

In the random access method provided in the embodiment shown in FIG. 4, the UE may trigger the target access object (one second access object) to transmit an SSB on demand (on-demand). Accordingly, preparation can be completed for performing RACH on the target access object, and the capacity of the network side is increased.

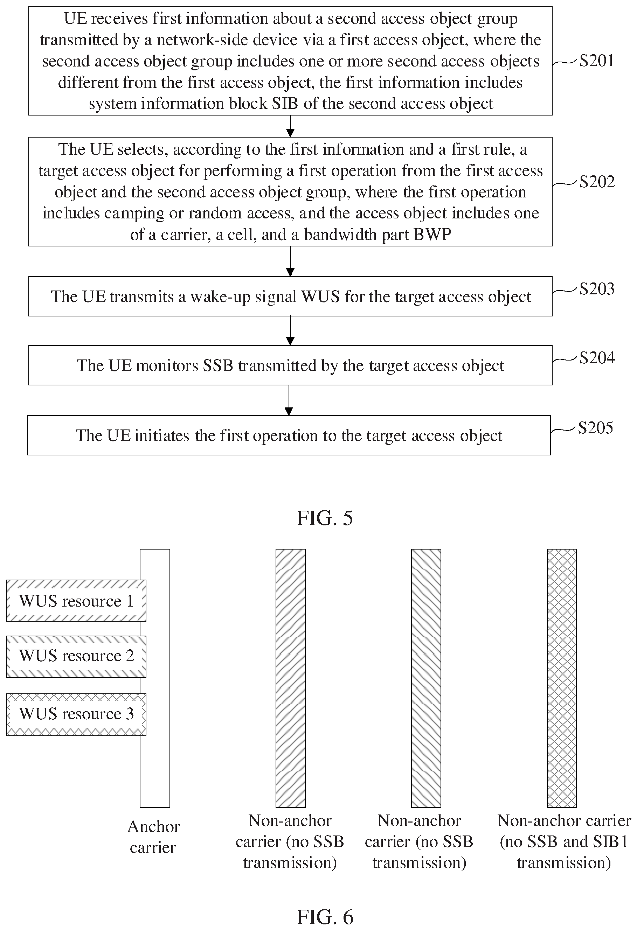

Optionally, as shown in FIG. 5, the random access method provided in this embodiment of the present application may further include the following step.

Step 205: The UE initiates the first operation to the target access object.

When the UE transmits one WUS for the target access object, the UE initiates the first operation to the target access object after transmission of the WUS; when the UE transmits two WUSs for the target access object (the first WUS and the second WUS), the UE may initiate the first operation to the target access object after transmission of the second WUS. Specifically, the target access object is one second access object, and step 205 (a time point at which the UE initiates the first operation to the target access object) specifically may include one of the following:
starting a second timer after transmission of the WUS to the target access object, and initiating, by the UE, the first operation to the target access object after the second timer expires (for example, initiating RACH, accordingly, the WUS may be the same WUS used for triggering SSB transmission and RACH monitoring, or may be the second WUS);
initiating, by the UE, the first operation to the target access object after A slots/symbols/milliseconds from transmitting the WUS to the target access object (for example, initiating RACH, accordingly, the WUS may be the same WUS used for triggering SSB transmission and RACH monitoring, or may be the second WUS); and
initiating, by the UE, the first operation to the target access object after B slots/symbols/milliseconds from receiving feedback for the WUS transmitted to the target access object (for example, initiating RACH, accordingly, the WUS may be the same WUS for triggering SSB transmission and RACH monitoring, or may be the second WUS).

Optionally, the random access method provided in the embodiment of the present application may further include:
transmitting, by the UE, a wake-up signal WUS for the target access object again in a case that a second condition is satisfied.

The second condition may include but is not limited to at least one of the following:
(1) SSB detection failure;
(2) the number of random accesses reaches a maximum value;
   the number of WUS transmissions is less than or equal to a preset maximum transmission count;
(3) no feedback is received for a previous WUS;
(4) the previous WUS is used for triggering SSB transmission, after receiving feedback for the previous WUS signal, a WUS for triggering RACH monitoring is transmitted again (that is, the WUS is transmitted again to trigger RACH monitoring); and
(5) no feedback is received for the previous WUS before a timer expires.

Optionally, the WUS signal transmitted again has at least one of the following characteristics:
(1) increased signal power;
(2) a transmission time interval from the previous WUS greater than a preset time interval; and
(3) the same frequency-domain resources and sequence resources as the previous WUS.

It should be noted that expressions such as triggering SSB (trigger SSB) transmission, triggering SSB adaptation (trigger SSB adaptation), triggering normal SSB (trigger normal SSB) transmission, triggering SSB to return to normal transmission mode involved in the embodiments of the present application represent the same meaning, which is triggering the second access object to switch from a non-normal SSB transmission mode (long-period SSB transmission mode, simplified SSB transmission mode, or on-demand SSB transmission mode) to a normal SSB transmission mode.

It should also be noted that SIB 1 and SIB involved in the embodiment of the present application both refer to system information block (System Information Block), and SIB1 is an example of SIB.

An application of the random access method provided in the embodiments of the present application is described below in conjunction with specific embodiments.

### Embodiment I

Assumption: UE obtains first information of Cell1, Cell2, Cell3 in a second access object group, that is, a second carrier group, from a first access object in operation, that is, first carrier Cell 0 (anchor carrier), meaning that the SIB of the first carrier includes system information of the second carrier group.

In the above-mentioned scenario 0 (the second carrier normally transmits an SSB and performs normal RACH monitoring), the first carrier is configured with SIBs corresponding to each second carrier in the second carrier group, and all second carriers in the second carrier group normally transmit an SSB and perform normal RACH monitoring. Specifically:
Cell 0: belongs to Band 0 (anchor carrier), normally transmits an SSB, and carries SIBs of the remaining carriers (Cell1, Cell2, Cell3) in SIB;
Cell 1: belongs to Band 1, normally transmits an SSB and performs normal RACH monitoring, and does not transmit a SIB1;
Cell 2: belongs to Band 1, normally transmits an SSB and performs normal RACH monitoring, and does not transmit a SIB1; and
Cell 3: belongs to Band 2, normally transmits an SSB and performs normal RACH monitoring, and does not transmit a SIB1.

In one example, the first information about the second carrier group transmitted by the network-side device via the first carrier may include: SIBs of each second carrier in the second carrier group.

The SIB of the second carrier included in the first information may include at least one of the following:
all or part of SIB of the second carrier, where the part of SIB may include: at least one of public land mobile network (Public Land Mobile Network, PLMN) information, configuration information related to a cell selection (Cell selection) criterion, configuration information related to a cell reselection (Cell reselection) criterion, and cell bar (Cell bar) information; and
SIB1 status information of the second carrier, where the SIB1 status information includes at least one of no transmission of SIB 1 and SIB 1 carried by system information of the first carrier.

In one example, the first information about the second carrier group transmitted by the network-side device via the first carrier may further include at least one of the following in addition to system information of the second carrier:
(1) Related configuration information of SSB currently transmitted by the at least one second carrier, specifically including at least one of the following:
   whether the at least one second carrier is transmitting SSB;
   at least one of a frequency point of SSB being transmitted by the at least one second carrier, an SSB transmission period, and the number of SSBs in one transmission period; and
   a transmission mode of SSB being transmitted by the at least one second carrier, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a transmission mode with no time-domain gap (gap) between multiple SSBs.
(2) Related configuration information of a RACH monitoring behavior currently adopted by the at least one second carrier, specifically including at least one of the following:
   whether the at least one second carrier performs RACH monitoring;
   at least one of a transmission period of RACH being monitored by the at least one second carrier, the number of RACHs in one transmission period, RACH frequency-domain resource configuration information, and RACH time-domain resource configuration information; and
   a RACH monitoring mode of the at least one second carrier, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), and the compact monitoring mode may be a monitoring mode with no time-domain gap (gap) between multiple ROs, and RO is short for physical random access channel occasion (PRACH Occasion).
(3) Feature information of the at least one second carrier, specifically including at least one of the following:
   identification information of the at least one second carrier (such as index or cell identifier);
   whether the at least one second carrier is in a bar bar state;
   a priority of the at least one second carrier when the UE performs random access channel selection;
   whether the at least one second carrier is set to a bar state for a first type of UE, where the first type includes at least one of reduced capability (Reduced Capability, Redcap), non-terrestrial network (Non-Terrestrial Network, NTN), and network energy saving (Network Energy Saving, NES) capability;
   a feature value N of a UE ID allowed to perform random access on the at least one second carrier, for example, a UE with UE ID mod number of carriers = N may perform random access on the carrier;
   whether the at least one second carrier supports UE camping;
   whether the at least one second carrier is a suitable cell (suitable cell); and
   whether the at least one second carrier supports cell selection and/or cell reselection.

In some embodiments, the first information may be transmitted by the first carrier via a broadcast message; or the first information is by default the same as corresponding information of the first carrier; or when the first information is not configured, it is by default the same as corresponding information of the first carrier. For example, at least one of PLMN information corresponding to the second carrier, configuration information related to a cell selection (Cell selection) criterion, configuration information related to a cell reselection (Cell reselection) criterion, and cell bar (Cell bar) information is the same as that of the first carrier.

In some embodiments, if the first information does not include related information of SSB or SIB1 currently transmitted by or RACH monitoring currently performed by a certain second carrier, the SSB transmission, SIB1 transmission, and RACH monitoring of the second carrier are by default in a normal state, or the same as corresponding information of the first carrier.

In some embodiments, during cell selection for performing the first operation, the first carrier is still preferentially selected even though special carriers (second carriers for which information has been obtained from the first carrier) exist.

In some embodiments, after the UE detects the first carrier and obtains the first information, if the first carrier is determined to be a suitable cell, the UE does not transmit WUS and selects the first carrier for camping (monitor paging);
if the first carrier is determined not to be a suitable cell, the UE performs at least one of the following:
determining according to part of SIB information and an SSB measurement result: the UE selects one or more second carriers in the second carrier group as target cell(s) according to a first rule, and determines whether the one or more second carriers are suitable cells according to information corresponding to the second carrier (for example, configuration information related to cell selection or cell reselection) and the SSB measurement result;
if at least one carrier is a suitable cell, the UE selects one of the second carriers according to the first rule for camping (monitor paging);
determining according to SIB1 and an SSB measurement result: the UE selects one or more second carriers in the second carrier group as target cell(s) according to the first rule, and determines whether the one or more second carriers are suitable cells according to SIB 1 corresponding to the second carrier (carried in the system information of the first carrier) and the SSB measurement result; and
if at least one carrier is suitable, the UE selects one carrier according to the first rule for camping (monitor paging).

The UE ignores the second carrier group and searches for other suitable cells.

It should be noted that a reference signal corresponding to one second carrier may include at least one of reference signals such as SSB, CSI-RS, DRS, and TRS. When the reference signal is SSB, for one second carrier, if SSB transmission is performed on the second carrier, SSB measurement is directly performed on the second carrier to obtain an SSB measurement result; if no SSB transmission is performed on the second carrier, an SSB measurement result transmitted on a fourth carrier is used as the SSB measurement result of the second carrier, where the fourth carrier may include one of a reference carrier configured for the second carrier, a carrier co-located with the second carrier, and a carrier located on the same band as the second carrier and consecutive to each other; or if no SSB transmission is performed on the second carrier, an SSB measurement result transmitted by the second carrier upon successful WUS triggering is used as the SSB measurement result of the second carrier (the same applies hereinafter and will not be repeated).

Optionally, in some embodiments, the UE performs at least one of the following to determine a target carrier for performing the first operation:
the UE selects one or more carriers in the first carrier and the second carrier group as target cell(s) according to the first rule: for the first carrier, the UE determines whether it is a suitable cell, according to an SSB measurement result and SIB1 configuration; and for carriers in the second carrier group, the UE determines whether the one or more carriers are suitable cells according to information corresponding to the carrier(s) (for example, configuration information related to cell selection or cell reselection) and the SSB measurement result;
if at least one carrier is a suitable cell, the UE selects one carrier according to the first rule for camping;
the UE selects one or more carriers in the first carrier and the second carrier group as target cell(s) according to a first rule: for the first carrier, the UE determines whether it is a suitable cell, according to an SSB measurement result and SIB1 configuration; and for carriers in the second carrier group, the UE determines whether the one or more carriers are suitable cells according to SIB1 corresponding to the carrier(s) (carried in the system information of the first carrier) and the SSB measurement result;
if at least one carrier is a suitable cell, the UE selects one carrier according to the first rule for camping.

In some embodiments, carriers in the second carrier group are not allowed for UE camping as stipulated by a protocol.

In some embodiments, the UE determines whether camping is allowed according to whether paging (paging) configuration information is included in information corresponding to the second carrier group transmitted on the first carrier.

In some embodiments, for a UE camping on the first carrier, intra-frequency and inter-frequency measurements are performed according to configuration information of the first carrier. If one carrier in the second carrier group is determined to be a highest ranked cell (highest ranked Cell) or a target cell for cell reselection, the UE further determines whether the cell is a suitable cell, and if the cell is a suitable cell, the UE performs cell reselection and camps on the cell according to SIB1 obtained from the first carrier.

In some embodiments, for a UE camping on the first carrier, if a random access demand exists, the UE by default directly initiates RACH on the first carrier to perform random access.

In some embodiments, for a UE camping on the first carrier, if a random access demand exists, the UE selects, according to the first rule, one target carrier for random access from the first carrier and the second carrier group:
(1) if the selected target carrier is the first carrier, the UE directly initiates RACH to perform random access; and
(2) if the selected target carrier is a carrier in the second carrier group, the UE initiates, according to SIB1 of the target carrier obtained on the first carrier, RACH on the carrier to perform random access.

In some embodiments, the first rule includes: the UE screens out target carriers that satisfy conditions, the conditions including at least one of the following:
the target carrier is not in a bar state for the UE;
RSRP/RSRQ measured on the target carrier satisfies a predetermined condition, for example, being greater than or equal to a threshold (threshold); and
the target carrier is a suitable cell for the UE.

In some embodiments, the UE selects one target carrier from all carriers (the first carrier and/or the second carrier group) or all screened carriers, including at least one of the following:
randomly selecting a target carrier;
randomly generating a weight value p, where each carrier is configured with a corresponding weight value p(1), p(2), ...in sequence, and when p is in a range between p(0)+p(1)+...+p(i-1) and p(0)+p(1)+...+p(i), selecting carrier i as the target carrier;
indicating/configuring, by the network side, a target carrier for the UE to perform random access;
selecting a carrier with a maximum or minimum carrier index as the target carrier;
selecting a carrier with a maximum, minimum, or intermediate center frequency as the target carrier;
selecting a carrier with a maximum or minimum SCS as the target carrier;
selecting a second carrier with a smallest frequency interval from the first carrier as the target carrier;
selecting a carrier that requires the minimum number of WUS transmissions as the target carrier;
selecting a carrier with a highest priority as the target carrier; and
selecting a carrier with a maximum RSRP/SINR measurement value of a reference signal as the target carrier.

In the above-mentioned scenario 1 (the second carrier does not transmit an SSB and performs normal RACH monitoring), the first carrier is configured with SIBs corresponding to each second carrier in the second carrier group, at least one second carrier in the second carrier group does not transmit an SSB and the at least one second carrier has a reference carrier, and each second carrier in the second carrier group performs normal RACH monitoring. Specifically:
Cell 0: belongs to Band 0 (anchor carrier), normally transmits an SSB, and carries SIBs of the remaining carriers (Cell1, Cell2, Cell3) in SIB;
Cell 1: belongs to Band 1, does not transmit an SSB (with the first carrier as a reference), performs normal RACH monitoring, and does not transmit a SIB1;
Cell 2: belongs to Band 1, normally transmits an SSB and performs normal RACH monitoring, and does not transmit a SIB1; and
Cell 3: belongs to Band 2, does not transmit an SSB (with Cell2 as a reference), performs normal RACH monitoring, and does not transmit a SIB 1.

In one example, the first information about the second carrier group transmitted by the network-side device via the first carrier may include: SIBs of each second carrier in the second carrier group.

The SIB of the second carrier included in the first information may include at least one of the following:
all or part of SIB of the second carrier, where the part of SIB may include: at least one of public land mobile network (Public Land Mobile Network, PLMN) information, configuration information related to a cell selection (Cell selection) criterion, configuration information related to a cell reselection (Cell reselection) criterion, and cell bar (Cell bar) information; and
SIB1 status information of the second carrier, where the SIB1 status information includes at least one of no transmission of SIB 1 and SIB 1 carried by the system information of the first carrier.

In one example, the first information about the second carrier group transmitted by the network-side device via the first carrier may further include at least one of the following in addition to the system information of the second carrier:
(1) Related configuration information of SSB currently transmitted by the at least one second carrier, specifically including at least one of the following:
   whether the at least one second carrier is transmitting SSB;
   at least one of a frequency point of SSB being transmitted by the at least one second carrier, an SSB transmission period, and the number of SSBs in one transmission period; and
   a transmission mode of SSB being transmitted by the at least one second carrier, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a transmission mode with no time-domain gap (gap) between multiple SSBs.
(2) Related configuration information of a RACH monitoring behavior currently adopted by the at least one second carrier, specifically including at least one of the following:
   whether the at least one second carrier performs RACH monitoring;
   at least one of a transmission period of RACH being monitored by the at least one second carrier, the number of RACHs in one transmission period, RACH frequency-domain resource configuration information, and RACH time-domain resource configuration information; and
   a RACH monitoring mode of the at least one second carrier, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), and the compact monitoring mode may be a monitoring mode with no time-domain gap (gap) between multiple ROs, and RO is short for physical random access channel occasion (PRACH Occasion).
(3) Feature information of the at least one second carrier, specifically including at least one of the following:
   identification information of the at least one second carrier;
   whether the at least one second carrier can use the first carrier as a reference carrier;
   whether the at least one second carrier is co-located with the first carrier;
   whether the at least one second carrier and the first carrier are located in a TAG;
   whether the at least one second carrier has a QCL relationship with the first carrier;
   a reference carrier of the at least one second carrier;
   a carrier co-located with the at least one second carrier;
   a carrier located in the same TAG as the at least one second carrier;
   a carrier having a QCL relationship with the at least one second carrier;
   whether the at least one second carrier is in a bar bar state;
   a priority of the at least one second carrier when the UE performs random access channel selection;
   whether the at least one second carrier is set to a bar state for a first type of UE, where the first type includes at least one of reduced capability (Reduced Capability, Redcap), non-terrestrial network (Non-Terrestrial Network, NTN), and network energy saving (Network Energy Saving, NES) capability;
   a feature value N of a UE ID allowed to perform random access on the at least one second carrier, for example, a UE with UE ID mod number of carriers = N may perform random access on the carrier;
   whether the at least one second carrier supports UE camping;
   whether the at least one second carrier is a suitable cell (suitable cell); and
   whether the at least one second carrier supports cell selection and/or cell reselection.

In some embodiments, the first information may be transmitted by the first carrier via a broadcast message; or the first information is by default the same as corresponding information of the first carrier; or when the first information is not configured, it is by default the same as corresponding information of the first carrier. For example, at least one of PLMN information corresponding to the second carrier, configuration information related to a cell selection (Cell selection) criterion, configuration information related to a cell reselection (Cell reselection) criterion, and cell bar (Cell bar) information is the same as that of the first carrier.

In some embodiments, after the UE detects the first carrier and obtains the first information, if the first carrier is determined to be a suitable cell, the UE does not transmit WUS, and selects the first carrier for camping (monitor paging), or selects one carrier for camping from the first carrier and/or the third carrier group according to a first rule:
the third carrier group includes one of carriers that use the first carrier as a reference cell, carriers co-located with the first carrier, and carriers that are on the same band as the first carrier and consecutive to each other;
if the first carrier is determined not to be a suitable cell, the UE performs at least one of the following:
   the UE selects one or more second carriers in the second carrier group as target cell(s) according to the first rule, and determines whether the one or more second carriers are suitable cells according to information corresponding to the second carriers (for example, configuration information related to cell selection or cell reselection) and the SSB measurement result;
   if at least one second carrier is a suitable cell, the UE selects one of the second carriers according to the first rule for camping (monitor paging);
   the UE selects one or more second carriers in the second carrier group as target cell(s) according to the first rule, and determines whether the one or more second carriers are suitable cells according to SIB1 corresponding to the second carriers (carried in the system information of the first carrier) and the SSB measurement result; and
   if at least one second carrier is a suitable cell, the UE selects one of the second carriers according to the first rule for camping (monitor paging).

The UE ignores the second carrier group and searches for other suitable cells.

Optionally, in some embodiments, the UE performs one of the following to determine a target carrier for performing the first operation:
the UE selects one or more carriers in the first carrier and the second carrier group according to the first rule: for the first carrier, the UE determines whether it is a suitable cell, according to an SSB measurement result and SIB1 configuration; and for carriers in the second carrier group, the UE determines whether the one or more carriers are suitable cells according to an SSB measurement result and SIB1 corresponding to the carrier(s) (carried in the system information of the first carrier);
if at least one carrier is a suitable cell, the UE selects one carrier according to the first rule for camping (monitor paging);
the UE selects one or more carriers in the first carrier and the second carrier group as target cell(s) according to the first rule: for the first carrier, the UE determines whether it is a suitable cell, according to an SSB measurement result and SIB1 configuration; and for carriers in the second carrier group, the UE determines whether the one or more carriers are suitable cells according to information corresponding to the carrier(s) (for example, configuration information related to cell selection or cell reselection) and the SSB measurement result; and
if at least one carrier is a suitable cell, the UE selects one carrier according to the first rule for camping (monitor paging).

It should be noted that for an SSB measurement result, if SSB transmission is performed on the carrier, SSB measurement is performed on the carrier to obtain the SSB measurement result; otherwise, measurement is performed on SSB transmitted on a reference carrier, a co-located carrier, or a carrier that is located on the same band and consecutive to each other configured for the carrier, and the measurement result is used as the SSB measurement result corresponding to the carrier.

In some embodiments, for a UE camping on the first carrier, intra-frequency and inter-frequency measurements are performed according to configuration information of the first carrier. If one second carrier in the second carrier group is determined to be a highest ranked cell (highest ranked cell) or a target cell for cell reselection, the UE may:
determine whether the second carrier is a suitable cell, according to SIB1 of the second carrier obtained from the first carrier, and if so, the UE performs cell reselection and camps on the second carrier; and
determine whether the second carrier is a suitable cell, and if so, the UE performs cell reselection and camps on the second carrier.

In some embodiments, for a UE camping on the first carrier, if a random access demand exists, the UE by default directly initiates RACH on the first carrier to perform random access.

In some embodiments, for a UE camping on the first carrier, if a random access demand exists, the UE selects, according to the first rule, one target carrier for random access from the first carrier and the second carrier group:
(1) if the selected target carrier is the first carrier, the UE directly initiates RACH to perform random access; and
(2) if the selected target carrier is a carrier in the second carrier group, the UE initiates, according to SIB1 of the target carrier obtained on the first carrier, RACH on the carrier to perform random access.

In some embodiments, the first rule includes: the UE screens out target carriers that satisfy conditions, the conditions including at least one of the following:
the target carrier is not in a bar state for the UE;
RSRP/RSRQ measured on the target carrier satisfies a predetermined condition, for example, being greater than or equal to a threshold (threshold); and
the target carrier is a suitable cell for the UE.

In some embodiments, the UE selects one target carrier from all carriers (the first carrier and/or the second carrier group) or all screened carriers, including at least one of the following:
randomly selecting a target carrier;
randomly generating a weight value p, where each carrier is configured with a corresponding weight value p(1), p(2), ...in sequence, and when p is in a range between p(0)+p(1)+...+p(i-1) and p(0)+p(1)+...+p(i), selecting carrier i as the target carrier;
indicating/configuring, by the network side, a target carrier for the UE to perform random access;
selecting a carrier with a maximum or minimum carrier index as the target carrier;
selecting a carrier with a maximum, minimum, or intermediate center frequency as the target carrier;
selecting a carrier with a maximum or minimum SCS as the target carrier;
selecting a second carrier with a smallest frequency interval from the first carrier as the target carrier;
selecting a carrier that requires the minimum number of WUS transmissions as the target carrier;
selecting a carrier with a highest priority as the target carrier; and
selecting a carrier with a maximum RSRP/SINR measurement value of a reference signal as the target carrier.

In the above-mentioned scenario 2 (the second carrier does not transmit an SSB and performs normal RACH monitoring), the first carrier is configured with SIBs corresponding to each second carrier in the second carrier group and WUS configuration for triggering SSB transmission, at least one second carrier in the second carrier group does not transmit an SSB (in on-demand SSB transmission mode), and each second carrier in the second carrier group performs normal RACH monitoring. Specifically:
Cell 0: belongs to Band 0 (anchor carrier), normally transmits an SSB, and carries SIBs of the remaining carriers (Cell1, Cell2, Cell3) in SIB;
Cell 1: belongs to Band 1, does not transmit an SSB (in on-demand SSB transmission mode), performs normal RACH monitoring, and does not transmit a SIB1;
Cell 2: belongs to Band 1, normally transmits an SSB and performs normal RACH monitoring, and does not transmit a SIB1; and
Cell 3: belongs to Band 2, does not transmit an SSB (in on-demand SSB transmission mode), performs normal RACH monitoring, and does not transmit a SIB1.

In one example, the first information about the second carrier group transmitted by the network-side device via the first carrier may include: SIBs of each second carrier in the second carrier group.

The SIB of the second carrier included in the first information may include at least one of the following:
all or part of SIB of the second carrier, where the part of SIB may include: at least one of public land mobile network (Public Land Mobile Network, PLMN) information, configuration information related to a cell selection (Cell selection) criterion, configuration information related to a cell reselection (Cell reselection) criterion, and cell bar (Cell bar) information; and
SIB1 status information of the second carrier, where the SIB1 status information includes at least one of no transmission of SIB 1 and SIB 1 carried by the system information of the first carrier.

In one example, the first information about the second carrier group transmitted by the network-side device via the first carrier may further include at least one of the following in addition to the system information of the second carrier:
(1) WUS configuration information for triggering the at least one second carrier to transmit an SSB, or WUS configuration information for triggering SSB adaptation of the at least one second carrier;
(2) Related configuration information of SSB currently transmitted by the at least one second carrier, specifically including at least one of the following:
   whether the at least one second carrier is transmitting SSB;
   at least one of a frequency point of SSB being transmitted by the at least one second carrier, an SSB transmission period, and the number of SSBs in one transmission period; and
   a transmission mode of SSB being transmitted by the at least one second carrier, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a transmission mode with no time-domain gap (gap) between multiple SSBs.
(3) Related configuration information of a RACH monitoring behavior currently adopted by the at least one second carrier, specifically including at least one of the following:
   whether the at least one second carrier performs RACH monitoring;
   at least one of a transmission period of RACH being monitored by the at least one second carrier, the number of RACHs in one transmission period, RACH frequency-domain resource configuration information, and RACH time-domain resource configuration information; and
   a RACH monitoring mode of the at least one second carrier, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), and the compact monitoring mode may be a monitoring mode with no time-domain gap (gap) between multiple ROs, and RO is short for physical random access channel occasion (PRACH Occasion).
(4) Related configuration information of SSB transmitted upon successful WUS triggering, specifically including at least one of the following:
   upon successful WUS triggering, at least one of a frequency point of SSB transmitted by the at least one second carrier, an SSB transmission period, and the number of SSBs in one transmission period;
   upon successful WUS triggering, a monitoring window for SSB transmitted by the at least one second carrier, meaning that the UE monitors SSB within the monitoring window;
   upon successful WUS triggering, at least one time-domain resource index or at least one position of a time-domain resource where the at least one second carrier actually transmits an SSB;
   upon successful WUS triggering, at least one of a transmission duration of SSB transmitted by the at least one second carrier, the number of SSB transmissions, and the number of SSB transmission periods;
   upon successful WUS triggering, a relative relationship between SSB transmitted by the at least one second carrier and SSB transmitted by the first carrier in at least one of time domain, frequency domain, and spatial domain;
   upon successful WUS triggering, a time-domain resource position of a first SSB transmitted by the at least one second carrier, for example, transmission in a nearest SSB period after X slots/symbols after a transmission time of the trigger signal (WUS); and
   upon successful WUS triggering, a transmission mode of SSB transmitted by the at least one second carrier, the transmission mode including one of a normal transmission mode, an energy-saving transmission mode (for example, transmitting only PSS and SSS), a compact transmission mode (for example, no time-domain gap between multiple SSBs), a long-period transmission mode (With a relatively long SSB period), and an on-demand (on-demand) transmission mode.
(5) Feature information of the at least one second carrier, specifically including at least one of the following:
   identification information of the at least one second carrier;
   whether the at least one second carrier is in a bar bar state;
   a priority of the at least one second carrier when the UE performs random access channel selection;
   whether the at least one second carrier is set to a bar state for a first type of UE, where the first type includes at least one of reduced capability (Reduced Capability, Redcap), non-terrestrial network (Non-Terrestrial Network, NTN), and network energy saving (Network Energy Saving, NES) capability;
   a feature value N of a UE ID allowed to perform random access on the at least one second carrier, for example, a UE with UE ID mod number of carriers = N may perform random access on the carrier;
   whether the at least one second carrier supports UE camping;
   whether the at least one second carrier is a suitable cell (suitable cell); and
   whether the at least one second carrier supports cell selection and/or cell reselection.

In some embodiments, the first information may be transmitted by the first carrier via a broadcast message; or the first information is by default the same as corresponding information of the first carrier; or when the first information is not configured, it is by default the same as corresponding information of the first carrier. For example, at least one of PLMN information corresponding to the second carrier, configuration information related to a cell selection (Cell selection) criterion, configuration information related to a cell reselection (Cell reselection) criterion, and cell bar (Cell bar) information is the same as that of the first carrier.

In some embodiments, if the first information does not include related information of SSB transmission/RACH monitoring currently performed on a second carrier (one carrier in the second carrier group), SSB transmission, SIB1 transmission and RACH monitoring of the carrier are by default in a normal state.

In some embodiments, during cell selection by the UE, the first carrier is still preferentially selected even though special carriers (second carriers for which information has been obtained from the first carrier) exist.

In some embodiments, after the UE detects the first carrier and obtains the first information, if the first carrier is determined to be a suitable cell, the UE does not transmit WUS and selects the first carrier for camping (monitor paging); and if the first carrier is determined not to be a suitable cell, the UE may:
transmit WUS to the second carrier, perform judgment according to a triggered SSB measurement result and SIB1: the UE selects one or more carriers in the second carrier group according to the first rule, transmits corresponding WUS and receives SSB, and determines whether the one or more second carriers are suitable cells according to an SSB measurement result after successful triggering and SIB1 information obtained via the first carrier;
if at least one second carrier is a suitable cell, the UE selects one of the second carriers according to the first rule for camping (monitor paging);
transmit WUS to the second carrier, and perform judgment according to a triggered SSB measurement result and part of SIB information: the UE selects one or more carriers in the second carrier group according to the first rule, transmits corresponding WUS and receives SSB, and determines whether the one or more second carriers are suitable cells according to information corresponding to the carrier(s) (for example, configuration information related to cell selection or cell reselection) and the SSB measurement result; and
if at least one second carrier is a suitable cell, the UE selects one of the second carriers according to the first rule for camping (monitor paging).

The UE ignores the second carrier group and searches for other suitable cells.

Optionally, in some embodiments, the UE performs one of the following to determine a target carrier for performing the first operation:
the UE selects one or more carriers in the first carrier and the second carrier group according to the first rule: for the first carrier, the UE determines whether it is a suitable cell, according to an SSB measurement result and SIB1 configuration; and for carriers in the second carrier group, the UE transmits corresponding WUS and receives SSB, and determines whether the one or more carriers are suitable cells according to an SSB measurement result and SIB 1 obtained via the first carrier; and
if at least one carrier is a suitable cell, the UE selects one carrier according to the first rule for camping (monitor paging);
the UE selects one or more carriers in the first carrier and the second carrier group as target cell(s) according to the first rule: for the first carrier, the UE determines whether it is a suitable cell, according to an SSB measurement result and SIB1 configuration; and for carriers in the second carrier group, the UE transmits corresponding WUS and receives SSB, and determines whether the one or more carriers are suitable cells according to an SSB measurement result and information corresponding to the carrier(s) (for example, configuration information related to cell selection or cell reselection); and
if at least one carrier is a suitable cell, the UE selects one carrier according to the first rule for camping (monitor paging).

In some embodiments, for a UE camping on the first carrier, intra-frequency and inter-frequency measurements are performed according to configuration information of the first carrier. If one second carrier in the second carrier group is determined to be a highest ranked cell (highest ranked cell) or a target cell for cell reselection, the UE may:
determine whether the second carrier is a suitable cell, according to SIB1 of the second carrier obtained from the first carrier, and if so, the UE performs cell reselection and camps on the second carrier; and
determine whether the second carrier is a suitable cell, and if so, the UE performs cell reselection and camps on the second carrier.

In some embodiments, for a UE camping on the first carrier, if a random access demand exists, the UE by default directly initiates RACH on the first carrier to perform random access.

In some embodiments, for a UE camping on the first carrier, if a random access demand exists, the UE selects, according to the first rule, one target carrier for random access from the first carrier and the second carrier group:
(1) if the selected target carrier is the first carrier, the UE directly initiates RACH to perform random access; and
(2) if the selected target carrier is a carrier in the second carrier group, the UE initiates, according to SIB1 of the target carrier obtained on the first carrier, RACH on the carrier to perform random access.

In some embodiments, the first rule includes: the UE screens out target carriers that satisfy conditions, the conditions including at least one of the following:
the target carrier is not in a bar state for the UE;
RSRP/RSRQ measured on the target carrier satisfies a predetermined condition, for example, being greater than or equal to a threshold (threshold); and
the target carrier is a suitable cell for the UE.

In some embodiments, the UE selects one target carrier from all carriers (the first carrier and/or the second carrier group) or all screened carriers, including at least one of the following:
randomly selecting a target carrier;
randomly generating a weight value p, where each carrier is configured with a corresponding weight value p(1), p(2), ...in sequence, and when p is in a range between p(0)+p(1)+...+p(i-1) and p(0)+p(1)+...+p(i), selecting carrier i as the target carrier;
indicating/configuring, by the network side, a target carrier for the UE to perform random access;
selecting a carrier with a maximum or minimum carrier index as the target carrier;
selecting a carrier with a maximum, minimum, or intermediate center frequency as the target carrier;
selecting a carrier with a maximum or minimum SCS as the target carrier;
selecting a second carrier with a smallest frequency interval from the first carrier as the target carrier;
selecting a carrier that requires the minimum number of WUS transmissions as the target carrier;
selecting a carrier with a highest priority as the target carrier; and
selecting a carrier with a maximum RSRP/SINR measurement value of a reference signal as the target carrier.

In the above-mentioned scenario 3 (the second carrier does not transmit an SSB (has a reference carrier) and does not perform normal RACH monitoring), the first carrier is configured with SIBs corresponding to each second carrier in the second carrier group and WUS configuration for triggering RACH monitoring, at least one second carrier in the second carrier group does not transmit an SSB (with the first carrier as a reference), and each second carrier in the second carrier group does not perform normal RACH monitoring. Specifically:
Cell 0: belongs to band 0 (anchor carrier), normally transmits an SSB, and carries SIBs of the remaining carriers (Cell1, Cell2, Cell3) in SIB;
Cell 1: belongs to Band 1, normally transmits an SSB, does not perform normal RACH monitoring, and does not transmit a SIB1;
Cell 2: belongs to Band 1, does not transmit an SSB (with the first carrier as a reference), does not perform normal RACH monitoring, and does not transmit a SIB1; and
Cell 3: belongs to Band 2, normally transmits an SSB (with Cell1 as a reference carrier), does not perform normal RACH monitoring, and does not transmit a SIB1.

In one example, the first information about the second carrier group transmitted by the network-side device via the first carrier may include: SIBs of each second carrier in the second carrier group.

The SIB of the second carrier included in the first information may include at least one of the following:
all or part of SIB of the second carrier, where the part of SIB may include: at least one of public land mobile network (Public Land Mobile Network, PLMN) information, configuration information related to a cell selection (Cell selection) criterion, configuration information related to a cell reselection (Cell reselection) criterion, and cell bar (Cell bar) information; and
SIB1 status information of the second carrier, where the SIB1 status information includes at least one of no transmission of SIB 1 and SIB 1 carried by the system information of the first carrier.

In one example, the first information about the second carrier group transmitted by the network-side device via the first carrier may further include at least one of the following in addition to the system information of the second carrier:
(1) WUS configuration information for triggering random access channel RACH monitoring of the at least one second carrier, or WUS configuration information for triggering RACH monitoring adaptation of the at least one second carrier.
(2) Related configuration information of SSB currently transmitted by the at least one second carrier, specifically including at least one of the following:
   whether the at least one second carrier is transmitting SSB;
   at least one of a frequency point of SSB being transmitted by the at least one second carrier, an SSB transmission period, and the number of SSBs in one transmission period; and
   a transmission mode of SSB being transmitted by the at least one second carrier, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a transmission mode with no time-domain gap (gap) between multiple SSBs.
(3) Related configuration information of RACH monitoring upon successful WUS triggering, specifically including:
   upon successful WUS triggering, at least one of a period for RACH monitoring performed by the at least one second carrier, the number of RACHs to be monitored, monitored RACH frequency-domain resource configuration information, monitored RACH time-domain resource configuration information, and a monitoring mode for RACH monitoring, where the monitoring mode includes one of a normal monitoring mode, a simplified monitoring mode (for example, reduced RO opportunity), a compact monitoring mode (no time-domain gap between multiple ROs), and an on-demand monitoring mode.
(4) Feature information of the at least one second carrier, specifically including at least one of the following:
   identification information of the at least one second carrier;
   whether the at least one second carrier can use the first carrier as a reference carrier;
   whether the at least one second carrier is co-located with the first carrier;
   whether the at least one second carrier and the first carrier belong to the same TAG;
   whether the at least one second carrier has a QCL relationship with the first carrier;
   a reference carrier of the at least one second carrier;
   a carrier co-located with the at least one second carrier;
   a carrier located in the same TAG as the at least one second carrier;
   a carrier having a QCL relationship with the at least one second carrier;
   whether the at least one second carrier is in a bar bar state;
   a priority of the at least one second carrier when the UE performs random access channel selection;
   whether the at least one second carrier is set to a bar state for a first type of UE, where the first type includes at least one of reduced capability (Reduced Capability, Redcap), non-terrestrial network (Non-Terrestrial Network, NTN), and network energy saving (Network Energy Saving, NES) capability;
   a feature value N of a UE ID allowed to perform random access on the at least one second carrier, for example, a UE with UE ID mod number of carriers = N may perform random access on the carrier;
   whether the at least one second carrier supports UE camping;
   whether the at least one second carrier is a suitable cell (suitable cell); and
   whether the at least one second carrier supports cell selection and/or cell reselection.

In some embodiments, the first information may be transmitted by the first carrier via a broadcast message; or the first information is by default the same as corresponding information of the first carrier; or when the first information is not configured, it is by default the same as corresponding information of the first carrier. For example, at least one of PLMN information corresponding to the second carrier, configuration information related to a cell selection (Cell selection) criterion, configuration information related to a cell reselection (Cell reselection) criterion, and cell bar (Cell bar) information is the same as that of the first carrier.

In some embodiments, during cell selection, the first carrier is still preferentially selected even though special carriers (second carriers for which information has been obtained from the first carrier) exist.

In some embodiments, after the UE detects the first carrier and obtains the first information, if the first carrier is determined to be a suitable cell, the UE does not transmit WUS and selects the first carrier for camping (monitor paging); and if the first carrier is determined not to be a suitable cell, the UE selects the second carrier for camping (monitor paging), or selects one carrier for camping (monitor paging) in the first carrier and/or the third carrier group according to the first rule:
the third carrier group includes at least one of carriers that use the first carrier as a reference cell, carriers co-located with the first carrier, and carriers that are on the same band as the first carrier and consecutive to each other;
if the first carrier is determined not to be a suitable cell, the UE performs at least one of the following:
   the UE selects one or more carriers in the second carrier group as target cell(s) according to the first rule, and determines whether the one or more carriers are suitable cells according to SIB1 corresponding to the carrier(s) (carried in the system information of the first carrier) and the SSB measurement result;
   if at least one carrier is a suitable cell, the UE selects one carrier according to the first rule for camping (monitor paging);
   the UE selects one or more carriers in the second carrier group as target cell(s) according to a first rule, and determines whether the one or more carriers are suitable cells according to information corresponding to the carrier(s) (for example, configuration information related to cell selection or cell reselection) and the SSB measurement result; and
   if at least one carrier is a suitable cell, the UE selects one carrier according to the first rule for camping (monitor paging).

The UE ignores the second carrier group and searches for other suitable cells.

Optionally, in some embodiments, the UE performs one of the following to determine a target carrier for performing the first operation:
the UE selects one or more carriers in the first carrier and the second carrier group according to the first rule: for the first carrier, the UE determines whether it is a suitable cell, according to an SSB measurement result and SIB1 configuration; and for carriers in the second carrier group, the UE determines whether the one or more carriers are suitable cells according to an SSB measurement result and SIB1 of the carriers (carried in the system information of the first carrier);
if at least one carrier is a suitable cell, the UE selects one carrier according to the first rule for camping (monitor paging);
the UE selects one or more carriers in the first carrier and the second carrier group as target cell(s) according to the first rule: for the first carrier, the UE determines whether it is a suitable cell, according to an SSB measurement result and SIB1 configuration; and for carriers in the second carrier group, the UE determines whether the one or more carriers are suitable cells according to information corresponding to the carrier(s) (for example, configuration information related to cell selection or cell reselection) and the SSB measurement result; and
if at least one carrier is a suitable cell, the UE selects one carrier according to the first rule for camping (monitor paging).

In some embodiments, for a UE camping on the first carrier, intra-frequency and inter-frequency measurements are performed according to configuration information of the first carrier. If one second carrier in the second carrier group is determined to be a highest ranked cell (highest ranked cell) or a target cell for cell reselection, the UE determines whether the cell is a suitable cell, according to an SSB measurement result and system information of the carrier obtained from the first carrier, and if the cell is a suitable cell, the UE performs cell reselection and camps on the cell.

In some embodiments, for a UE camping on the first carrier, if a random access demand exists, the UE by default directly initiates RACH on the first carrier to perform random access.

In some embodiments, for a UE camping on the first carrier, if a random access demand exists, the UE selects, according to the first rule, one target carrier for random access from the first carrier and the second carrier group:
(1) if the selected target carrier is the first carrier, the UE directly initiates RACH to perform random access; and
(2) if the selected target carrier is a carrier in the second carrier group, the UE first transmits a WUS to trigger RACH monitoring of the target carrier, and then initiates, according to the configuration of SIB1 of the target carrier obtained via the first carrier, RACH on the carrier to perform random access.

In some embodiments, the first rule includes: the UE screens out target carriers that satisfy conditions, the conditions including at least one of the following:
the target carrier is not in a bar state for the UE;
RSRP/RSRQ measured on the target carrier satisfies a predetermined condition, for example, being greater than or equal to a threshold (threshold); and
the target carrier is a suitable cell for the UE.

In some embodiments, the UE selects one target carrier from all carriers (the first carrier and/or the second carrier group) or all screened carriers, including at least one of the following:
randomly selecting a target carrier;
randomly generating a weight value p, where each carrier is configured with a corresponding weight value p(1), p(2), ...in sequence, and when p is in a range between p(0)+p(1)+...+p(i-1) and p(0)+p(1)+...+p(i), selecting carrier i as the target carrier;
indicating/configuring, by the network side, a target carrier for the UE to perform random access;
selecting a carrier with a maximum or minimum carrier index as the target carrier;
selecting a carrier with a maximum, minimum, or intermediate center frequency as the target carrier;
selecting a carrier with a maximum or minimum SCS as the target carrier;
selecting a second carrier with a smallest frequency interval from the first carrier as the target carrier;
selecting a carrier that requires the minimum number of WUS transmissions as the target carrier;
selecting a carrier with a highest priority as the target carrier; and
selecting a carrier with a maximum RSRP/SINR measurement value of a reference signal as the target carrier.

In the above-mentioned scenario 4 (the second carrier does not transmit an SSB and does not perform normal RACH monitoring), the first carrier is configured with SIBs corresponding to each second carrier in the second carrier group and WUS configuration for triggering SSB transmission and RACH monitoring, at least one second carrier in the second carrier group does not transmit an SSB (on-demand SSB transmission mode), and each second carrier in the second carrier group does not perform normal RACH monitoring. Specifically:
Cell 0: belongs to Band 0 (anchor carrier), normally transmits an SSB, and carries SIBs of the remaining carriers (Cell1, Cell2, Cell3) in SIB;
Cell 1: belongs to Band 1, transmits an SSB on demand, does not perform normal RACH monitoring, and does not transmit a SIB1;
Cell 2: belongs to Band 1, normally transmits an SSB, does not perform normal RACH monitoring, and does not transmit a SIB1; and
Cell 3: belongs to Band 2, transmits an SSB on demand, does not perform normal RACH monitoring, and does not transmit a SIB1.

In one example, the first information about the second carrier group transmitted by the network-side device via the first carrier may include: SIBs of each second carrier in the second carrier group.

The SIB of the second carrier included in the first information may include at least one of the following:
all or part of SIB of the second carrier, where the part of SIB may include: at least one of public land mobile network (Public Land Mobile Network, PLMN) information, configuration information related to a cell selection (Cell selection) criterion, configuration information related to a cell reselection (Cell reselection) criterion, and cell bar (Cell bar) information; and
SIB1 status information of the second carrier, where the SIB1 status information includes at least one of no transmission of SIB1 and SIB1 carried by the system information of the first carrier.

In one example, the first information about the second carrier group transmitted by the network-side device via the first carrier may further include at least one of the following in addition to the system information of the second carrier:
(1) WUS configuration information for triggering the at least one second carrier to transmit an SSB, or WUS configuration information for triggering SSB adaptation of the at least one second carrier.
(2) WUS configuration information for triggering random access channel RACH monitoring of the at least one second carrier, or WUS configuration information for triggering RACH monitoring adaptation of the at least one second carrier.
(3) WUS configuration information for both triggering the at least one second carrier to transmit an SSB or perform SSB adaptation, and triggering the at least one second carrier to perform random access channel RACH monitoring or RACH monitoring adaptation.
(4) Related configuration information of SSB currently transmitted by the at least one second carrier, specifically including at least one of the following:
   whether the at least one second carrier is transmitting SSB;
   at least one of a frequency point of SSB being transmitted by the at least one second carrier, an SSB transmission period, and the number of SSBs in one transmission period; and
   a transmission mode of SSB being transmitted by the at least one second carrier, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a transmission mode with no time-domain gap (gap) between multiple SSBs.
(5) Related configuration information of a RACH monitoring behavior currently adopted by the at least one second carrier, specifically including at least one of the following:
   whether the at least one second carrier performs RACH monitoring;
   at least one of a transmission period of RACH being monitored by the at least one second carrier, the number of RACHs in one transmission period, RACH frequency-domain resource configuration information, and RACH time-domain resource configuration information; and
   a RACH monitoring mode of the at least one second carrier, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), and the compact monitoring mode may be a monitoring mode with no time-domain gap (gap) between multiple ROs, and RO is short for physical random access channel occasion (PRACH Occasion).
(6) Related configuration information of RACH monitoring upon successful WUS triggering, specifically including:
   upon successful WUS triggering, at least one of a period for RACH monitoring performed by the at least one second carrier, the number of RACHs to be monitored, monitored RACH frequency-domain resource configuration information, monitored RACH time-domain resource configuration information, and a monitoring mode for RACH monitoring, where the monitoring mode includes one of a normal monitoring mode, a simplified monitoring mode (for example, reduced RO opportunity), a compact monitoring mode (no time-domain gap between multiple ROs), and an on-demand monitoring mode.
(7) Related configuration information of RACH monitoring upon successful WUS triggering, specifically including:
   upon successful WUS triggering, at least one of a period for RACH monitoring performed by the at least one second carrier, the number of RACHs to be monitored, monitored RACH frequency-domain resource configuration information, monitored RACH time-domain resource configuration information, and a monitoring mode for RACH monitoring, where the monitoring mode includes one of a normal monitoring mode, a simplified monitoring mode (for example, reduced RO opportunity), a compact monitoring mode (no time-domain gap between multiple ROs), and an on-demand monitoring mode.
(8) Feature information of the at least one second carrier, specifically including at least one of the following:
   identification information of the at least one second carrier;
   whether the at least one second carrier is in a bar bar state;
   a priority of the at least one second carrier when the UE performs random access channel selection;
   whether the at least one second carrier is set to a bar state for a first type of UE, where the first type includes at least one of reduced capability (Reduced Capability, Redcap), non-terrestrial network (Non-Terrestrial Network, NTN), and network energy saving (Network Energy Saving, NES) capability;
   a feature value N of a UE ID allowed to perform random access on the at least one second carrier, for example, a UE with UE ID mod number of carriers = N may perform random access on the carrier;
   whether the at least one second carrier supports UE camping;
   whether the at least one second carrier is a suitable cell (suitable cell); and
   whether the at least one second carrier supports cell selection and/or cell reselection.

In some embodiments, the first information may be transmitted by the first carrier via a broadcast message; or the first information is by default the same as corresponding information of the first carrier; or when the first information is not configured, it is by default the same as corresponding information of the first carrier. For example, at least one of PLMN information corresponding to the second carrier, configuration information related to a cell selection (Cell selection) criterion, configuration information related to a cell reselection (Cell reselection) criterion, and cell bar (Cell bar) information is the same as that of the first carrier.

In some embodiments, during cell selection by the UE, the first carrier is still preferentially selected even though special carriers (second carriers for which information has been obtained from the first carrier) exist.

In some embodiments, after the UE detects the first carrier and obtains the first information, if the first carrier is determined to be a suitable cell, the UE does not transmit WUS and selects the first carrier for camping (monitor paging); and if the first carrier is determined not to be a suitable cell, the UE performs one of the following:
transmitting a WUS to each second carrier in the second carrier group, and determining according to a triggered SSB measurement result and SIB 1: the UE selects one or more carriers in the second carrier group according to the first rule, transmits corresponding WUS and receives SSB, and determines whether the one or more second carriers are suitable cells according to an SSB measurement result after successful triggering and SIB1 information of the carrier obtained via the first carrier;
if at least one second carrier is a suitable cell, the UE selects one of the second carriers according to the first rule for camping (monitor paging);
transmitting a WUS to each second carrier in the second carrier group, and performing judgment according to a triggered SSB measurement result and part of SIB information: the UE selects one or more carriers in the second carrier group according to the first rule, transmits corresponding WUS and receives SSB, and determines whether the one or more second carriers are suitable cells according to information corresponding to the carrier(s) (for example, configuration information related to cell selection or cell reselection) and the SSB measurement result; and
if at least one second carrier is a suitable cell, the UE selects one of the second carriers according to the first rule for camping (monitor paging).

The UE ignores the second carrier group and searches for other suitable cells.

Optionally, in some embodiments, the UE performs one of the following to determine a target carrier for performing the first operation:
the UE selects one or more carriers in the first carrier and the second carrier group according to the first rule: for the first carrier, the UE determines whether it is a suitable cell, according to an SSB measurement result and SIB1 configuration; and for carriers in the second carrier group, the UE transmits corresponding WUS and receives SSB, and determines whether the one or more carriers are suitable cells according to an SSB measurement result and SIB1 obtained via the first carrier;
if at least one carrier is a suitable cell, the UE selects one carrier according to the first rule for camping (monitor paging);
the UE selects one or more carriers in the first carrier and the second carrier group as target cell(s) according to the first rule: for the first carrier, the UE determines whether it is a suitable cell, according to an SSB measurement result and SIB1 configuration; and for carriers in the second carrier group, the UE transmits corresponding WUS and receives SSB, and determines whether the one or more carriers are suitable cells according to an SSB measurement result and information corresponding to the carrier(s) (for example, configuration information related to cell selection or cell reselection); and
if at least one carrier is a suitable cell, the UE selects one carrier according to the first rule for camping (monitor paging).

In some embodiments, for a UE camping on the first carrier, intra-frequency and inter-frequency measurements are performed according to configuration information of the first carrier. If one second carrier in the second carrier group is determined to be a highest ranked cell (highest ranked cell) or a target cell for cell reselection, the UE transmits a WUS to the carrier to trigger SSB transmission, and after obtaining an SSB measurement result, determines whether the cell is a suitable cell, according to an SSB measurement result and system information of the carrier obtained from the first carrier, and if the cell is a suitable cell, the UE performs cell reselection and camps on the cell.

In some embodiments, for a UE camping on the first carrier, if a random access demand exists, the UE by default directly initiates RACH on the first carrier to perform random access.

In some embodiments, for a UE camping on the first carrier, if a random access demand exists, the UE selects one target carrier for random access from the first carrier and the second carrier group according to a first rule:
(1) if the selected target carrier is the first carrier, the UE directly initiates RACH to perform random access; and
(2) if the selected target carrier is a carrier in the second carrier group, and the target carrier does not transmit an SSB and has no reference carrier, the UE transmits a WUS to trigger SSB transmission and RACH monitoring of the target carrier, and then the UE initiates RACH on the carrier for random access according to a configuration of SIB1 of the target carrier obtained on the first carrier. Optionally, the UE may transmit one WUS for triggering SSB transmission and RACH monitoring, or may first transmit a first WUS to trigger SSB transmission, and then transmit a further WUS to trigger RACH monitoring.

In some embodiments, the first rule includes: the UE screens out target carriers that satisfy conditions, the conditions including at least one of the following:
the target carrier is not in a bar state for the UE;
RSRP/RSRQ measured on the target carrier satisfies a predetermined condition, for example, being greater than or equal to a threshold (threshold); and
the target carrier is a suitable cell for the UE.

In some embodiments, the UE selects one target carrier from all carriers (the first carrier and/or the second carrier group) or all screened carriers, including at least one of the following:
randomly selecting a target carrier;
randomly generating a weight value p, where each carrier is configured with a corresponding weight value p(1), p(2), ...in sequence, and when p is in a range between p(0)+p(1)+...+p(i-1) and p(0)+p(1)+...+p(i), selecting carrier i as the target carrier;
indicating/configuring, by the network side, a target carrier for the UE to perform random access;
selecting a carrier with a maximum or minimum carrier index as the target carrier;
selecting a carrier with a maximum, minimum, or intermediate center frequency as the target carrier;
selecting a carrier with a maximum or minimum SCS as the target carrier;
selecting a second carrier with a smallest frequency interval from the first carrier as the target carrier;
selecting a carrier that requires the minimum number of WUS transmissions as the target carrier;
selecting a carrier with a highest priority as the target carrier; and
selecting a carrier with a maximum RSRP/SINR measurement value of a reference signal as the target carrier.

It should be noted that on-demand SSB involved in the embodiments means that the carrier supports on-demand SSB transmission mode, that is, supports the UE in using a WUS to trigger normal SSB transmission. The same applies to on-demand SIB1 and on-demand RACH monitoring.

Embodiment II (when there are multiple carriers with different transmission modes or identical transmission modes, the UE selects the carrier with a highest priority for RACH)

The UE obtains system information of Cell1, Cell2, Cell3, Cell4, and Cell5 on the operating first carrier Cell 0 (anchor carrier), and the UE obtains the remaining first information about the second carrier Cell1, Cell2, Cell3, Cell4, and Cell5 on CellO, where
Cell 0: belongs to Band 0 (anchor carrier), normally transmits an SSB, and carries system information of the remaining carriers in SIB;
Cell 1: belongs to Band 1, does not transmit an SSB (with the SSB of the first carrier as a reference), performs normal RACH monitoring, and does not transmit a SIB1;
Cell 2: belongs to Band 2, transmits an SSB on demand, performs normal RACH monitoring, and does not transmit a SIB 1;
Cell 3: belongs to Band 3, normally transmits an SSB, does not perform normal RACH monitoring, and does not transmit a SIB1;
Cell 4: belongs to Band 4, does not transmit an SSB (with the SSB of the first carrier as a reference), does not perform normal RACH monitoring, and does not transmit a SIB1; and
Cell 5: belongs to Band 5, transmits an SSB on demand, does not perform normal RACH monitoring, and does not transmit a SIB 1.

If a first priority is specified: priority of carriers transmitting SSB > priority of carriers on-demand SSB transmission > priority of carriers not transmitting SSB, and a second priority is specified: priority of carriers performing normal RACH monitoring > priority of carriers not performing normal RACH monitoring, with the first priority taking precedence, then: among Cell1, Cell2, Cell3, Cell4, and Cell5, Cell3 has the highest priority, so the UE intends to perform RACH on Cell3.

Embodiment **III** (when there are multiple carriers with different transmission modes or identical transmission modes, the UE selects the carrier requiring the least number of WUS transmissions for RACH)

The UE obtains system information of Cell1, Cell2, Cell3, Cell4, and Cell5 on the operating first carrier Cell 0 (anchor carrier), and the UE obtains the first information about the second carrier Cell1, Cell2, Cell3, Cell4, and Cell5 on Cell0, where
Cell 0: belongs to Band 0, normally transmits an SSB, and carries system information of the remaining carriers in SIB;
Cell 1: belongs to Band 1, abnormally transmits an SSB (with the SSB of the first carrier as a reference), performs normal RACH monitoring, and does not transmit a SIB 1;
Cell 2: belongs to Band 2, transmits an SSB on demand, performs normal RACH monitoring, and does not transmit a SIB 1;
Cell 3: belongs to Band 3, transmits an SSB, does not perform normal RACH monitoring, and does not transmit a SIB 1;
Cell 4: belongs to Band 4, does not transmit an SSB (with the SSB of the first carrier as a reference), does not perform normal RACH monitoring, and does not transmit a SIB1; and
Cell 5: belongs to Band 5, transmits an SSB on demand, does not perform normal RACH monitoring, and does not transmit a SIB 1.

The UE selects a carrier from the second carrier group for RACH according to the principle of minimizing the number of required WUS transmissions. In this embodiment, one WUS transmission is used either to trigger SSB transmission or to trigger RACH monitoring.

Specifically:
Cell1 requires no WUS transmission: the UE may directly use the SSB of the first carrier as a reference and perform random access on Cell1 according to the system information obtained on Cell0;
Cell2 requires one WUS transmission to trigger SSB transmission or SSB adaptation of Cell2;
Cell3 requires one WUS transmission to trigger RACH monitoring of Cell3;
Cell4 requires one WUS transmission to trigger RACH monitoring of Cell4; and
Cell5 requires two WUS transmissions, one to trigger SSB transmission and one to trigger RACH monitoring;
therefore, among Cell1, Cell2, Cell3, Cell4, and Cell5, Cell1 requires the least number of WUS transmissions. Accordingly, the UE intends to perform RACH on Cell1. If multiple cells have the same configuration as Cell1, the UE randomly selects one of them for RACH.

Embodiment IV (when there are multiple carriers with different transmission modes or identical transmission modes, the UE selects the carrier with the highest priority for RACH)

The UE obtains system information of Cell1, Cell2, Cell3, Cell4, and Cell5 on the operating first carrier Cell 0 (anchor carrier), and the UE obtains the first information about the second carrier Cell1, Cell2, Cell3, Cell4, and Cell5 on Cell0, where
Cell 0: belongs to Band 0, normally transmits an SSB, and carries system information of the remaining carriers in SIB;
Cell 1: belongs to Band 1, does not transmit an SSB (with the SSB of the first carrier as a reference), performs normal RACH monitoring, and does not transmit a SIB 1, where its frequency interval from Cell0 falls within range 1;
Cell 2: belongs to Band 2, transmits an SSB on demand, performs normal RACH monitoring, and does not transmit a SIB1, where its frequency interval from CellO falls within range 1;
Cell 3: belongs to Band 3, normally transmits an SSB, does not perform normal RACH monitoring, and does not transmit a SIB1, where its frequency interval from Cell0 falls within range 1;
Cell 4: belongs to Band 4, does not transmit an SSB (with the SSB of the first carrier as a reference), does not perform normal RACH monitoring, and does not transmit a SIB 1, where its frequency interval from Cell0 falls within range 2; and
Cell 5: belongs to Band 5, transmits an SSB on demand, does not perform normal RACH monitoring, and does not transmit a SIB1, where its frequency interval from Cell0 falls within range 2.

The protocol stipulates a carrier priority formula: y=A+B+C, where a smaller priority value indicates a higher priority, and
A is associated with the SSB transmission mode of the carrier
A=0, the carrier is in normal SSB transmission mode;
A=1, the carrier is in no SSB (with the first carrier as a reference) transmission mode; and
A=2, the carrier is in on-demand SSB transmission mode, simplified SSB transmission mode, or long-period SSB transmission mode (normal SSB transmission may be triggered by WUS);
B is associated with the RACH monitoring mode of the carrier
B=0, the carrier is in normal RACH monitoring mode; and
B=1, the carrier is in on-demand RACH monitoring mode; and
C is associated with the frequency interval between the carrier and the first carrier
C=0, frequency interval is within range 1; and
C=1, frequency interval is within range 2.

According to the above formula, it can be known that: $priority of Cell 1 = 1 + 0 + 0 = 1 ,$ $priority of Cell 2 = 2 + 0 + 0 = 2 ,$ $priority of Cell 3 = 0 + 1 + 0 = 1 ,$ $priority of Cell 4 = 1 + 1 + 1 = 3 ,$ $priority of Cell 5 = 2 + 1 + 1 = 4 .$

Since a smaller priority value indicates a higher priority, the UE randomly selects one of Cell1 and Cell3 for RACH.

In addition, the priority of the second carrier or carrier group may also be directly configured in the first information by the network side, and the UE may select a random access carrier according to the configured priority value.

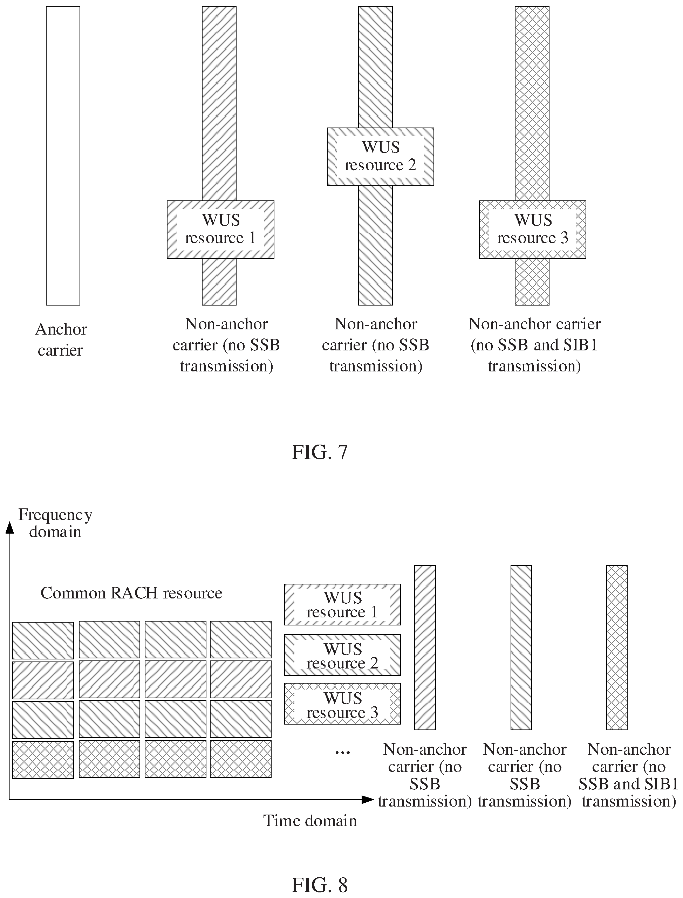

Embodiment V (correspondence between WUS resources and the second carrier or second carrier group)
(1) As shown in FIG. 6, WUS resources configured for the second carrier group by the first carrier (anchor carrier) are in one-to-one correspondence with carriers (non-anchor carriers) in the second carrier group.
(2) As shown in FIG. 7, each second carrier has a corresponding WUS resource position.
(3) As shown in FIG. 8, WUS resources configured for the second carrier group by the first carrier (anchor carrier) overlap with common RACH resources, and the UE may be regarded as triggering SSB transmission of the corresponding second carrier (non-anchor carrier) only when it transmits a specific preamble sequence on specific resources.

The random access method provided in the embodiments of the present application are described above. Corresponding to the random access method above, an embodiment of the present application further provides a communication method, which is described below.

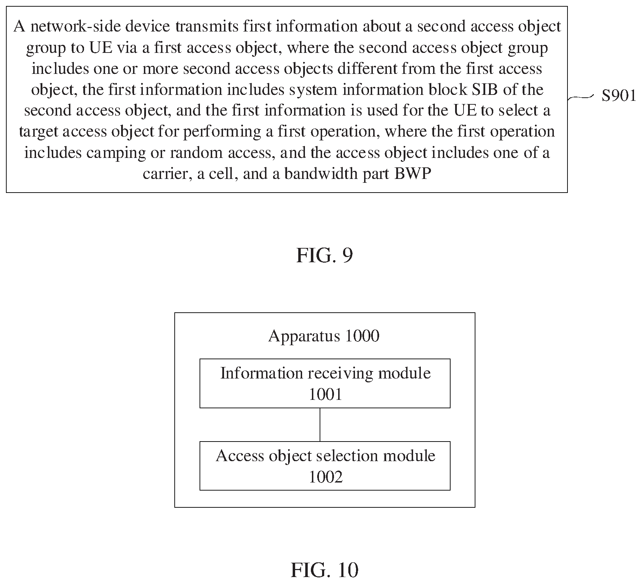

As shown in FIG. 9, a communication method provided in an embodiment of the present application, the method may include the following step:

Step 901: A network-side device transmits first information about a second access object group to UE via a first access object, where the second access object group includes one or more second access objects different from the first access object, the first information includes system information block SIB of the second access object, and the first information is used for selection, by the UE, of a target access object for performing a first operation, where the first operation includes camping or random access, and the access object includes one of a carrier, a cell, and a bandwidth part BWP.

The access object may include one of a carrier (carrier), a cell (cell), and a bandwidth part (Bandwidth Part, BWP). The random access method provided in this embodiment of the present application is applicable to a multi-access object scenario, and the following mainly takes a multi-carrier scenario as an example.

In an implementation, in a multi-carrier scenario, the first access object may be an anchor carrier (anchor carrier), and the second access object may be a non-anchor carrier (non-anchor carrier). On the anchor carrier, the UE may obtain system information (system information) of the anchor carrier and necessary system information (necessary system information) of other non-anchor carriers. The UE may perform at least one of random access channel (Random Access Channel, RACH), data transmission, and data reception on any anchor carrier and non-anchor carriers.

In another implementation, in a multi-carrier scenario, the first access object may be a carrier that normally transmits an SSB, and the second access object may be a carrier that abnormally transmits an SSB (SSB-less carrier).

The first information may be transmitted by the first access object via a broadcast message; or the first information is by default the same as corresponding information of the first access object.

System information of the second access object included in the first information includes at least one of the following:
all SIB or part of SIB of the second access object, where the part of SIB may include: at least one of public land mobile network (Public Land Mobile Network, PLMN) information, configuration information related to a cell selection (Cell selection) criterion, configuration information related to a cell reselection (Cell reselection) criterion, and cell bar (Cell bar) information; and
SIB1 status information of the second access object, where the SIB1 status information includes at least one of no transmission of SIB1 and SIB1 carried by system information of the first access object.

The first information corresponds to at least one second access object in the second access object group, and the first information further includes at least one of the following:
(1) WUS configuration information for triggering the at least one second access object to transmit an SSB, or WUS configuration information for triggering SSB adaptation of the at least one second access object, where the SSB includes at least one of a synchronization signal block and a physical broadcast channel block.
(2) WUS configuration information for triggering RACH monitoring of the at least one second access object, or WUS configuration information for triggering adaptation of RACH monitoring (RACH adaptation) of the at least one second access object.
(3) Related configuration information of SSB currently transmitted by the at least one second access object, specifically including at least one of the following:
   whether the at least one second access object is transmitting SSB;
   at least one of a frequency point of SSB being transmitted by the at least one second access object, an SSB transmission period, and the number of SSBs in one transmission period; and
   a transmission mode of SSB being transmitted by the at least one second access object, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a mode with no time-domain gap (gap) between multiple SSBs.
(4) Related configuration information of a current RACH monitoring behavior of the at least one second access object, specifically including at least one of the following:
   whether the at least one second access object performs RACH monitoring;
   at least one of a transmission period of RACH being monitored by the at least one second access object, the number of RACHs in one transmission period, RACH frequency-domain resource configuration information, and RACH time-domain resource configuration information; and
   a monitoring mode for RACH monitoring performed by the at least one second access object, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), and the compact monitoring mode may be a monitoring mode with no time-domain gap (gap) between multiple ROs, and RO is short for physical random access channel occasion (PRACH Occasion).
(5) Related configuration information of SSB transmitted upon successful WUS triggering, specifically including at least one of the following:
   upon successful WUS triggering, at least one of a frequency point of SSB transmitted by the at least one second access object, an SSB transmission period, and the number of SSBs in one transmission period;
   upon successful WUS triggering, a monitoring window for SSB transmitted by the at least one second access object, meaning that the UE monitors SSB within the monitoring window;
   upon successful WUS triggering, at least one time-domain resource index or at least one position of a time-domain resource where the at least one second access object actually transmits an SSB;
   upon successful WUS triggering, at least one of a transmission duration of SSB transmitted by the at least one second access object, the number of SSB transmissions, and the number of SSB transmission periods;
   upon successful WUS triggering, a relative relationship between SSB transmitted by the at least one second access object and SSB transmitted by the first access object in at least one of time domain, frequency domain, and spatial domain;
   upon successful WUS triggering, a time-domain resource position of a first SSB transmitted by the at least one second access object, for example, transmission in a nearest SSB period after X slots/symbols after a transmission time of the trigger signal (WUS); and
   upon successful WUS triggering, a transmission mode of SSB transmitted by the at least one second access object, the transmission mode including one of a normal transmission mode, an energy-saving transmission mode (for example, transmitting only PSS and SSS), a compact transmission mode (for example, no time-domain gap between multiple SSBs), a long-period transmission mode (with a relatively long SSB period), and an on-demand (on-demand) transmission mode.
(6) Related configuration information of RACH monitoring upon successful WUS triggering, specifically including:
   upon successful WUS triggering, at least one of a period for RACH monitoring performed by the at least one second access object, the number of RACHs to be monitored, monitored RACH frequency-domain resource configuration information, monitored RACH time-domain resource configuration information, and a monitoring mode for RACH monitoring, where the monitoring mode includes one of a normal monitoring mode, a simplified monitoring mode (for example, reduced RO opportunity), a compact monitoring mode (no time-domain gap between multiple ROs), and an on-demand monitoring mode.
(7) Feature information of the at least one second access object, specifically including at least one of the following:
   identification information of the at least one second access object;
   whether the at least one second access object can use the first access object as a reference access object;
   whether the at least one second access object is being co-located (co-located) with the first access object;
   whether the at least one second access object and the first access object belong to the same timing advance group (Timing Advance Group, TAG);
   whether the at least one second access object has a quasi co-location (Quasi Co Location, QCL) relationship with the first access object;
   a reference access object of the at least one second access object;
   an access object co-located with the at least one second access object;
   an access object belonging to the same TAG as the at least one second access object;
   an access object having a QCL relationship with the at least one second access object;
   whether the at least one second access object is in a bar bar state;
   a priority of the at least one second access object when the UE performs random access channel selection;
   whether the at least one second access object is set to a bar state for a first type of UE, where the first type includes at least one of reduced capability (Reduced Capability, Redcap), non-terrestrial network (Non-Terrestrial Network, NTN), and network energy saving (Network Energy Saving, NES) capability;
   a feature value N of a UE ID allowed to perform random access on the at least one second access object, for example, a UE with UE ID mod number of carriers = N may perform random access on the carrier;
   whether the at least one second access object supports UE camping;
   whether the at least one second access object is a suitable cell (suitable cell); and
   whether the at least one second access object supports cell selection and/or cell reselection.

The WUS configuration information included in the first information may include at least one of the following:
(1) Synchronization reference configuration information of WUS, specifically including at least one of the following:
   at least one of SSB, channel state information-reference signal (Channel State Information-Reference Signal, CSI-RS), and tracking reference signal (tracking reference signal, TRS) of the first access object; and
   GPS timing (GPS timing).
(2) Resource configuration information of WUS, specifically including at least one of the following:
   time-domain resource information;
   frequency domain resource information; and
   signal sequence configuration information, for example, preamble grouping, which may specifically indicate a preamble grouping index indicating that the group of preambles is used to trigger SSB of the at least one second access object.
(3) Power configuration information of WUS, specifically including at least one of the following:
   initial signal power; and
   signal power ramping step.
(4) Repetition transmission configuration information of WUS, specifically including at least one of the following:
   a repetition count for a single signal transmission; and
   a maximum repetition count for channel transmission.
(5) Spatial-domain parameter configuration information of WUS, specifically including at least one of the following:
   a correspondence between the WUS and an SSB of the first access object;
   a correspondence between the WUS and an SSB of the at least one second access object; and
   a correspondence between the WUS and an SSB of the second access object group.
(6) Transmission timer (timer) configuration information of WUS. The timer is used to avoid excessively frequent WUS transmission. Generally, the timer is started after WUS transmission, and repeated WUS transmission is not allowed before the timer expires.

The form of the WUS signal includes at least one of the following:
a RACH;
Msg1;
a preamble (preamble) sequence;
a sounding reference signal (Sounding Reference Signal, SRS); and
a physical uplink control channel (Physical Uplink Control Channel, PUCCH).

The configuration manner of the resource configuration information of the WUS includes at least one of the following:
configuring a signal resource list in the first information, each element of the signal resource list corresponding one-to-one to an index of the second access object or the second access object group, one element in the signal resource list including one or more resources;
configuring a signal resource list in the first information, each element of the signal resource list explicitly corresponding to an index of the second access object or the second access object group;
configuring a candidate resource set in the first information, one or more resources in the candidate resource set corresponding to one resource number, one resource number corresponding to an index of one second access object or one second access object group, the resource number being determined according to at least one of time domain, frequency domain, and spatial domain; and
configuring one or more signal resources for the second access object or the second access object group in the first information.

The signal resources configured by the resource configuration information of the WUS include at least one of the following:
time-frequency resources that are the same as time-frequency resources of a common RACH on the first access object or the second access object group, that is, sharing the same time-frequency resources with the common RACH on the first access object;
time-frequency resources that are time-frequency resources of a dedicated RACH specially used for triggering SSB transmission and/or RACH monitoring on the first access object or the second access object group, where the time-frequency resources of the dedicated RACH may be completely different time-frequency resources from the common RACH on the first access object, or may be a part of the time-frequency resources of the common RACH on the first access object; and
time-frequency resources that are time-frequency resources of a dedicated SRS/PUCCH used for triggering SSB transmission and/or RACH monitoring on the first access object or the second access object group.

The grouping manner of the second access object group includes at least one of the following:
configured by a network-side device; and
specified by a protocol.

The grouping rule of the second access object group includes at least one of the following:
second access objects in the same band (band) form one group;
second access objects in the same band range form one group;
second access objects that are the same in at least one of initial BWP (Initial BWP), active BWP (active BWP), SSB, and SCS form one group;
second access objects with the same transmission mode form one group, where the transmission mode is related to at least one of the following: whether to transmit an SSB, whether to perform RACH monitoring, and whether to support on-demand SSB (on-demand SSB) transmission;
co-located second access objects form one group; and
second access objects with consistent SSB transmission periods form one group.

For how the UE selects, according to the first information, a target access object for performing a first operation from the first access object and the second access object group, reference may be made to the description of the embodiment shown in FIG. 2, which is not repeated herein.

The communication method provided in the embodiment shown in FIG. 9, since the network-side device may provide first information about a second access object group to the UE via a first access object, where the first information includes system information block SIB of the second access object, so that the UE may select, according to the first information, a target access object for camping or random access from the first access object and the second access object group. The second access object does not need to continuously transmit an SSB, SIB, and other information, but transmits an SSB or performs RACH monitoring on demand. Therefore, the capacity of the network side can be ensured to a maximum extent while energy saving is performed for the network side.

Optionally, the target access object belongs to the second access object group, the first information includes WUS configuration information for triggering the at least one second access object to transmit an SSB, or WUS configuration information for triggering SSB adaptation of the at least one second access object, and the first information includes WUS configuration information for triggering random access channel RACH monitoring of the at least one second access object, or WUS configuration information for triggering RACH monitoring adaptation of the at least one second access object. The communication method provided in this embodiment of the present application may further include:
receiving, by the target access object, a wake-up signal WUS, where the WUS is used for triggering at least one of transmission of SSB and monitoring of RACH by the target access object.

In one example, the WUS is transmitted by the UE in a case that a first condition is satisfied, and the first condition may include at least one of the following:
(1) the first access object is not a suitable cell;
(2) the target access object is a suitable cell;
(3) intra-frequency (intra-frequency) or inter-frequency (inter-frequency) measurement is performed on the target access object;
(4) the target access object is in a first energy-saving state, where the first energy-saving state includes at least one of no transmission of SSB, no transmission of SIB, no monitoring of RACH, an energy-saving SSB (such as sparse SSB) transmission, an energy-saving SIB (such as sparse SIB) transmission, and energy-saving RACH monitoring (such as sparse RACH monitoring), and the energy-saving SSB includes one of a light SSB, a simplified SSB, a sparse SSB, and a long-period SSB;
(5) the UE is sensitive to access delay; and
(6) the UE is in a process of recovery from a link failure.

In another example, the wake-up signal WUS for the target access object is transmitted by the UE on the assumption that the target access object is in a second energy-saving state.

The second energy-saving state may include at least one of the following:
no SIB transmission, normal SSB transmission, and normal RACH monitoring;
no SIB transmission, no SSB transmission or energy-saving SSB transmission (for example, simplified SSB or sparse SSB), with the first access object as a reference, and normal RACH monitoring;
no SIB transmission, normal SSB transmission, and no normal RACH monitoring; and
no SIB transmission, no SSB transmission or energy-saving SSB transmission (for example, simplified SSB or sparse SSB), and no normal RACH monitoring.

In the first example, the receiving by the target access object, a wake-up signal WUS may include: receiving, by the target access object, one WUS for the target access object, where the WUS may be used for two purposes: triggering the target access object to transmit an SSB, and triggering the target access object to monitor RACH.

In the second example, the receiving, by the target access object, a wake-up signal WUS may include: receiving, by the target access object, a first WUS, where the first WUS is used for triggering the target access object to transmit an SSB; and receiving, by the target access object, a second WUS, where the second WUS is used for triggering the target access object to monitor RACH.

Exemplarily, the receiving, by the target access object, a second WUS (a time point at which the target access object receives the second WUS) includes one of the following:
receiving, by the target access object, the second WUS transmitted by the UE after Z slots/symbols/milliseconds from transmitting the first WUS;
receiving, by the target access object, the second WUS transmitted by the UE after X slots/symbols/milliseconds from receiving feedback for the first WUS;
receiving, by the target access object, the second WUS transmitted by the UE after Y slots/symbols/milliseconds from receiving a first SSB transmitted after successfully triggering the target access object;
receiving, by the target access object, the second WUS transmitted by the UE when a transmission count of the first WUS reaches a maximum value; and
receiving, by the target access object, the second WUS transmitted by the UE after a first timer expires, where the first timer is started upon transmission of the first WUS.

The communication method provided in this embodiment may trigger the second access object to transmit an SSB or perform RACH monitoring on demand (on-demand), instead of continuously transmitting SSB or continuously performing RACH monitoring, nor always refraining from transmitting SSB or performing RACH monitoring. Therefore, the capacity of the network side can be ensured to a maximum extent while energy saving is performed for the network-side device.

Optionally, when the WUS is used for triggering SSB transmission, the communication method provided in the embodiment of the present application may further include: transmitting, by the target access object, an SSB, so that the target access object transmits an SSB on demand (on-demand) under the triggering of the WUS. Accordingly, preparation can be completed for performing accessing on the target access object, and the capacity of the network side is increased.

Optionally, the communication method provided in this embodiment of the present application may further include:
monitoring, by the target access object, the first operation initiated by the UE, for example, monitoring RACH initiated by the UE to the target access object.

Optionally, the communication method provided in this embodiment of the present application may further include:
receiving, by the target access object, a WUS transmitted again by the UE in a case that a second condition is satisfied, so as to improve the success rate of performing the first operation.

The second condition may include but is not limited to at least one of the following:
(1) SSB detection failure;
(2) the number of random accesses reaches a maximum value;
   the number of WUS transmissions is less than or equal to a preset maximum transmission count;
(3) no feedback is received for a previous WUS;
(4) the previous WUS is used for triggering SSB transmission, after receiving feedback for the previous WUS signal, transmitting a WUS used for triggering RACH monitoring again (that is, transmitting a WUS again is to trigger RACH monitoring); and
(5) no feedback is received for the previous WUS before a timer expires.

Optionally, the WUS signal transmitted again has at least one of the following characteristics:
(1) increased signal power;
(2) a transmission time interval from the previous WUS greater than a preset time interval; and
(3) the same frequency-domain resources and sequence resources as the previous WUS.

The communication method applied to a network-side device provided in the embodiment of the present application has been described above.

It should be noted that the execution subject of the random access method or communication method provided in the embodiment of the present application may be a communication apparatus. In the embodiments of the present application, the communication apparatus executing the random access method is taken as an example to describe the communication apparatus provided in the embodiments of the present application.

The communication apparatus provided in the embodiments of the present application is described below with reference to the accompanying drawings. Since the communication apparatus provided in the embodiments of the present application corresponds to the random access method provided in the embodiments of the present application, the description of the communication apparatus provided in the embodiment of the present application is relatively brief. For related details, reference may be made to the introduction of the method embodiment part above.

As shown in FIG. 10, an embodiment of the present application provides a random access apparatus 1000, where the apparatus 1000 may include an information receiving module 1001 and an access object selection module 1002.

The information receiving module 1001 is configured to receive first information about a second access object group transmitted by a network-side device via a first access object, where the second access object group includes one or more second access objects different from the first access object, the first information includes system information block SIB of the second access object, and the access object includes one of a carrier, a cell, and a bandwidth part BWP.

The access object may include one of a carrier (carrier), a cell (cell), and a bandwidth part (Bandwidth Part, BWP). The random access method provided in this embodiment of the present application is applicable to a multi-access object scenario, and the following mainly takes a multi-carrier scenario as an example.

In an implementation, in a multi-carrier scenario, the first access object may be an anchor carrier (anchor carrier), and the second access object may be a non-anchor carrier (non-anchor carrier). On the anchor carrier, the UE may obtain system information (system information) of the anchor carrier and necessary system information (necessary system information) of other non-anchor carriers. The UE may perform at least one of random access channel (Random Access Channel, RACH), data transmission, and data reception on any anchor carrier and non-anchor carrier.

In another implementation, in a multi-carrier scenario, the first access object may be a carrier that normally transmits an SSB, and the second access object may be a carrier that abnormally transmits an SSB (SSB-less carrier).

The first information may be transmitted by the first access object via a broadcast message; or the first information is by default the same as corresponding information of the first access object.

System information of the second access object included in the first information includes at least one of the following:
all SIB or part of SIB of the second access object, where the part of SIB may include at least one of public land mobile network (Public Land Mobile Network, PLMN) information, configuration information related to a cell selection (Cell selection) criterion, configuration information related to a cell reselection (Cell reselection) criterion, and cell bar (Cell Bar) information; and
SIB1 status information of the second access object, where the SIB1 status information includes at least one of no transmission of SIB1 and SIB1 carried by system information of the first access object.

The first information corresponds to at least one second access object in the second access object group, and the first information further includes at least one of the following:
(1) Wake-up signal (Wake-up Signal, WUS) configuration information for triggering the at least one second access object to transmit an SSB, or WUS configuration information for triggering SSB adaptation (SSB adaptation) of the at least one second access object.
(2) WUS configuration information for triggering RACH monitoring of the at least one second access object, or WUS configuration information for triggering adaptation of RACH monitoring (RACH adaptation) of the at least one second access object;
(3) Related configuration information of SSB currently transmitted by the at least one second access object, specifically including at least one of the following:
   whether the at least one second access object is transmitting SSB;
   at least one of a frequency point of SSB being transmitted by the at least one second access object, an SSB transmission period, and the number of SSBs in one transmission period; and
   a transmission mode of SSB being transmitted by the at least one second access object, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a transmission mode with no time-domain gap (gap) between multiple SSBs.
(4) Related configuration information of a current RACH monitoring behavior of the at least one second access object, specifically including at least one of the following:
   whether the at least one second access object performs RACH monitoring;
   at least one of a transmission period of RACH being monitored by the at least one second access object, the number of RACHs in one transmission period, RACH frequency-domain resource configuration information, and RACH time-domain resource configuration information; and
   a monitoring mode for RACH monitoring performed by the at least one second access object, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), and the compact monitoring mode may be a monitoring mode with no time-domain gap (gap) between multiple ROs, and RO is short for physical random access channel occasion (PRACH Occasion).
(5) Related configuration information of SSB transmitted upon successful WUS triggering, specifically including at least one of the following:
   upon successful WUS triggering, at least one of a frequency point of SSB transmitted by the at least one second access object, an SSB transmission period, and the number of SSBs in one transmission period;
   upon successful WUS triggering, a monitoring window for SSB transmitted by the at least one second access object, meaning that the UE monitors SSB within the monitoring window;
   upon successful WUS triggering, at least one time-domain resource index or at least one position of a time-domain resource where the at least one second access object actually transmits an SSB;
   upon successful WUS triggering, at least one of a transmission duration of SSB transmitted by the at least one second access object, the number of SSB transmissions, and the number of SSB transmission periods;
   upon successful WUS triggering, a relative relationship between SSB transmitted by the at least one second access object and SSB transmitted by the first access object in at least one of time domain, frequency domain, and spatial domain;
   upon successful WUS triggering, a time-domain resource position of a first SSB transmitted by the at least one second access object, for example, transmission in a nearest SSB period after X slots/symbols after a transmission time of the trigger signal (WUS); and
   upon successful WUS triggering, a transmission mode of SSB transmitted by the at least one second access object, the transmission mode including one of a normal transmission mode, an energy-saving transmission mode (for example, transmitting only PSS and SSS), a compact transmission mode (for example, no time-domain gap between multiple SSBs), a long-period transmission mode (with a relatively long SSB period), and an on-demand (on-demand) transmission mode.
(6) Related configuration information of RACH monitoring upon successful WUS triggering, specifically including:
   upon successful WUS triggering, at least one of a period for RACH monitoring performed by the at least one second access object, the number of RACHs to be monitored, monitored RACH frequency-domain resource configuration information, monitored RACH time-domain resource configuration information, and a monitoring mode for RACH monitoring, where the monitoring mode includes one of a normal monitoring mode, a simplified monitoring mode (for example, reduced RO opportunity), a compact monitoring mode (no time-domain gap between multiple ROs), and an on-demand monitoring mode.
(7) Feature information of the at least one second access object, specifically including at least one of the following:
   identification information of the at least one second access object;
   whether the at least one second access object can use the first access object as a reference access object;
   whether the at least one second access object is being co-located (co-located) with the first access object;
   whether the at least one second access object and the first access object belong to the same timing advance group (Timing Advance Group, TAG);
   whether the at least one second access object has a quasi co-location (Quasi Co Location, QCL) relationship with the first access object;
   a reference access object of the at least one second access object;
   an access object co-located with the at least one second access object;
   an access object belonging to the same TAG as the at least one second access object;
   an access object having a QCL relationship with the at least one second access object;
   whether the at least one second access object is in a bar bar state;
   a priority of the at least one second access object when the UE performs random access channel selection;
   whether the at least one second access object is set to a bar state for a first type of UE, where the first type includes at least one of reduced capability (Reduced Capability, RedCap), non-terrestrial network (Non-Terrestrial Network, NTN), and network energy saving (Network Energy Saving, NES) capability;
   a feature value N of a UE ID allowed to perform random access on the at least one second access object, for example, a UE with UE ID mod number of carriers = N may perform random access on the carrier;
   whether the at least one second access object supports UE camping;
   whether the at least one second access object is a suitable cell (suitable cell); and
   whether the at least one second access object supports cell selection and/or cell reselection.

The WUS configuration information included in the first information may include at least one of the following:
(1) Synchronization reference configuration information of WUS, specifically including at least one of the following:
   at least one of SSB, channel state information-reference signal (Channel State Information-Reference Signal, CSI-RS), and tracking reference signal (tracking reference signal, TRS) of the first access object; and
   GPS timing (GPS timing).
(2) Resource configuration information of WUS, specifically including at least one of the following:
   time-domain resource information;
   frequency domain resource information; and
   signal sequence configuration information, for example, preamble grouping, which may specifically indicate a preamble grouping index indicating that the group of preambles is used to trigger SSB of the at least one second access object.
(3) Power configuration information of WUS, specifically including at least one of the following:
   initial signal power; and
   signal power ramping step.
(4) Repetition transmission configuration information of WUS, specifically including at least one of the following:
   a repetition count for a single signal transmission; and
   a maximum repetition count for channel transmission.
(5) Spatial-domain parameter configuration information of WUS, specifically including at least one of the following:
   a correspondence between the WUS and an SSB of the first access object;
   a correspondence between the WUS and an SSB of the at least one second access object; and
   a correspondence between the WUS and an SSB of the second access object group.
(6) Transmission timer (timer) configuration information of WUS. The timer is used to avoid excessively frequent WUS transmission. Generally, the timer is started after WUS transmission, and repeated WUS transmission is not allowed before the timer expires.

The form of the WUS signal includes at least one of the following:
a RACH;
Msg1;
a preamble (preamble) sequence;
a sounding reference signal (Sounding Reference Signal, SRS); and
a physical uplink control channel (Physical Uplink Control Channel, PUCCH).

The configuration manner of the resource configuration information of the WUS includes at least one of the following:
configuring a signal resource list in the first information, each element of the signal resource list corresponding one-to-one to an index of the second access object or the second access object group, one element in the signal resource list including one or more resources;
configuring a signal resource list in the first information, each element of the signal resource list explicitly corresponding to an index of the second access object or the second access object group;
configuring a candidate resource set in the first information, one or more resources in the candidate resource set corresponding to one resource number, one resource number corresponding to an index of one second access object or one second access object group, the resource number being determined according to at least one of time domain, frequency domain, and spatial domain; and
configuring one or more signal resources for the second access object or the second access object group in the first information.

The signal resources configured by the resource configuration information of the WUS include at least one of the following:
time-frequency resources that are the same as time-frequency resources of a common RACH on the first access object or the second access object group, that is, sharing the same time-frequency resources with the common RACH on the first access object;
time-frequency resources that are time-frequency resources of a dedicated RACH specially used for triggering SSB transmission and/or RACH monitoring on the first access object or the second access object group, where the time-frequency resources of the dedicated RACH may be completely different time-frequency resources from the common RACH on the first access object, or may be a part of the time-frequency resources of the common RACH on the first access object; and
time-frequency resources that are time-frequency resources of a dedicated SRS/PUCCH used for triggering SSB transmission and/or RACH monitoring on the first access object or the second access object group.

The grouping manner of the second access object group includes at least one of the following:
configured by a network-side device; and
specified by a protocol.

The grouping rule of the second access object group includes at least one of the following:
second access objects in the same band (band) form one group;
second access objects in the same band range form one group;
second access objects that are the same in at least one of initial BWP (Initial BWP), active BWP (active BWP), SSB, and SCS form one group;
second access objects with the same transmission mode form one group, where the transmission mode is related to at least one of the following: whether to transmit an SSB, whether to perform RACH monitoring, and whether to support on-demand SSB (on-demand SSB) transmission;
co-located second access objects form one group; and
second access objects with consistent SSB transmission periods form one group.

The access object selection module 1002 is configured to select, according to the first information and a first rule, a target access object for performing a first operation from the first access object and the second access object group, where the first operation includes camping or random access.

The first rule may be related to at least one of the following:
one or more access objects for the UE to perform random access, as indicated or configured by a network-side device;
an access object for the UE to perform random access being the first access object by default;
bar status information of the second access object;
an index value of the second access object;
a center frequency of the second access object;
a subcarrier spacing (SubCarrier Spacing, SCS) of the second access object;
an identifier of the second access object;
a frequency interval between the second access object and the first access object;
whether the second access object performs normal RACH monitoring;
whether the second access object normally transmits an SSB;
whether the second access object supports normal RACH monitoring and normal transmission of SSB;
the number of WUS transmissions to be transmitted to the second access object;
a priority of the second access object;
a signal strength measurement value of a reference signal of the second access object, the signal strength including at least one of reference signal received power (Reference Signal Received Power, RSRP) and signal to interference plus noise ratio (Signal to Interference plus Noise Ratio, SINR);
a randomly generated index of an access object;
a weight value of the second access object;
a randomly generated weight value of an access object;
whether the first access object is a suitable cell; and
whether the second access object is a suitable cell.

The priority of the second access object may be explicitly indicated by a network-side device; or the priority of the second access object is related to at least one of the following:
(a) a transmission mode of the second access object, the transmission mode including one of the following: whether to normally transmit an SSB, whether to support on-demand SSB transmission, and whether to normally monitor RACH;
(b) a frequency band interval between the second access object and the first access object; and
(c) the number of the second access object.

Two examples are provided below to illustrate how the access object selection module 1002 selects, according to the first information and a first rule, a target access object for performing a first operation from the first access object and the second access object group. Other examples will be involved in the specific embodiments below and are not repeated herein, which will be described in detail below.

### First example

The access object selection module 1002 may be configured to:
determine whether the first access object is a suitable cell;
select the first access object as the target access object when the first access object is a suitable cell; and
perform a first step or a second step when the first access object is not a suitable cell; where
the first step includes:
   determining whether at least one second access object in the second access object group is a suitable cell, according to a reference signal measurement result corresponding to the at least one second access object and part SIB or all of SIB of the at least one second access object included in the first information; and
   selecting, according to the first rule, one suitable cell as the target access object for performing the first operation from the at least one second access object in a case that one or more second access objects among the at least one second access object are suitable cells; and
   the second step includes:
      ignoring the second access object, and searching for another suitable cell as the target access object for performing the first operation.

Further, the searching for another suitable cell as the target access object for performing the first operation may include:
searching for a suitable cell as the target access object for performing the first operation from one or more second access objects in the second access object group; and
searching for a suitable cell as the target access object for performing the first operation from one or more third access objects in a third access object group, where the third access object group includes access objects in the second access object group that satisfy a third condition.

The third condition may include at least one of the following:
using the first access object as a reference;
being co-located with the first access object; and
being consecutive access objects on a same band as the first access object.

### Second example

The access object selection module 1002 may be configured to:
determine whether the first access object is a suitable cell, according to a measurement result of SSB transmitted by the first access object and SIB of the first access object;
determine whether at least one second access object in the second access object group is a suitable cell, according to a reference signal measurement result corresponding to the at least one second access object and part SIB or all of SIB of the at least one second access object included in the first information; and
select, according to the first rule, one suitable cell as the target access object for performing the first operation from the first access object and the at least one second access object in a case that the first access object is a suitable cell, and one or more second access objects among the at least one second access object are suitable cells.

It should be noted that the apparatus shown in FIG. 10 can implement the method shown in FIG. 2, with the same technical effects achieved. Therefore, the description is relatively simple, and for related parts, reference may be made to the description of the embodiment shown in FIG. 2 above.

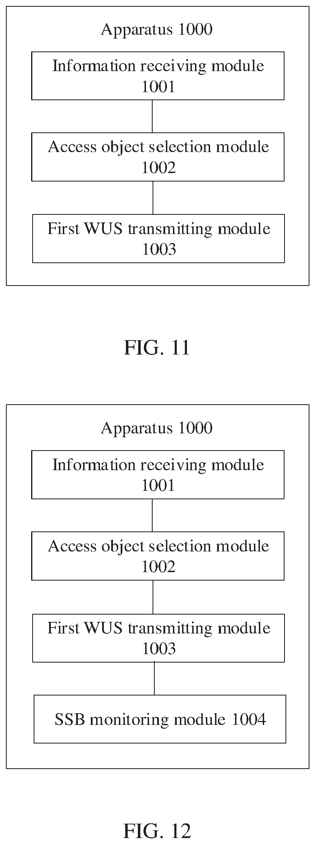

Optionally, as shown in FIG. 11, the random access apparatus 1000 according to the embodiments of the present application may further include:
a first WUS transmitting module 1003, configured to transmit a wake-up signal WUS for the target access object, in a case that the target access object belongs to the second access object group, that the first information includes wake-up signal WUS configuration information for triggering the at least one second access object to transmit an SSB or WUS configuration information for triggering SSB adaptation of the at least one second access object, and that the first information includes WUS configuration information for triggering random access channel RACH monitoring of the at least one second access object or WUS configuration information for triggering RACH monitoring adaptation of the at least one second access object, where the WUS is used for triggering at least one of transmission of SSB and monitoring of RACH by the target access object.

In one example, the first WUS transmitting module 1003 is configured to transmit a WUS for the target access object in a case that a first condition is satisfied.

The first condition may include at least one of the following:
(1) the first access object is not a suitable cell;
(2) the target access object is a suitable cell;
(3) intra-frequency (intra-frequency) or inter-frequency (inter-frequency) measurement is performed on the target access object;
(4) the target access object is in a first energy-saving state, where the first energy-saving state includes at least one of no SSB transmission, no SIB transmission, no RACH monitoring, an energy-saving SSB (such as sparse SSB) transmission, an energy-saving SIB (such as sparse SIB) transmission, and energy-saving RACH monitoring (such as sparse RACH monitoring), and the energy-saving SSB includes one of a light SSB, a simplified SSB, a sparse SSB, and a long-period SSB;
(5) the UE is sensitive to access delay; and
(6) the UE is in a process of recovery from a link failure.

In another example, the apparatus may further include: an assumption module, configured to, before the transmitting a WUS for the target access object, assume that the target access object is in a second energy-saving state.

The second energy-saving state may include at least one of the following:
no SIB transmission, normal SSB transmission, and normal RACH monitoring;
no SIB transmission, no SSB transmission or energy-saving SSB transmission (for example, simplified SSB or sparse SSB), with the first access object as a reference, and normal RACH monitoring;
no SIB transmission, normal SSB transmission, and no normal RACH monitoring; and
no SIB transmission, no SSB transmission or energy-saving SSB transmission (for example, simplified SSB or sparse SSB), and no normal RACH monitoring.

In the first example, the first WUS transmitting module 1003 may be configured to: transmit one WUS for the target access object, where the WUS may be used for two purposes: triggering the target access object to transmit an SSB, and triggering the target access object to monitor RACH.

In the second example, the first WUS transmitting module 1003 may be configured to: transmit a first WUS for the target access object, where the first WUS is used for triggering the target access object to transmit an SSB; and transmit a second WUS for the target access object, where the second WUS is used for triggering the target access object to monitor RACH.

Exemplarily, the first WUS transmitting module 1003 may be configured to perform one of the following operations:
starting to transmit a second WUS for the target access object after Z slots/symbols/milliseconds from transmitting the first WUS;
starting to transmit a second WUS for the target access object after X slots/symbols/milliseconds from receiving feedback for the first WUS;
starting to transmit a second WUS for the target access object after Y slots/symbols/milliseconds from receiving a first SSB transmitted after successfully triggering the target access object;
transmitting a second WUS for the target access object when a transmission count of the first WUS reaches a maximum value; and
starting a first timer after transmitting the first WUS, and transmitting a second WUS for the target access object after the first timer expires.

The random access apparatus 1000 provided in the embodiment shown in FIG. 11 can trigger the second access object to transmit an SSB or perform RACH monitoring on demand (on-demand), instead of continuously transmitting SSB or continuously performing RACH monitoring, always not transmitting SSB or always not performing RACH monitoring. Therefore, the capacity of the network side can be ensured to a maximum extent while energy saving is performed for the network-side device.

Optionally, as shown in FIG. 12, the random access apparatus 1000 according to the embodiments of the present application may further include:
an SSB monitoring module 1004, configured to monitor SSB transmitted by the target access object when the WUS is used for triggering SSB transmission.

Exemplarily, the SSB monitoring module 1004 may specifically be configured to perform one of the following operations:
starting a third timer after transmission of the WUS, and starting to monitor SSB transmitted by the target access object after expiration of the third timer;
starting to monitor SSB transmitted by the target access object after C slots/symbols/milliseconds after transmission of the WUS;
starting to monitor SSB transmitted by the target access object at the beginning of a next slot after transmission of the WUS; and
monitoring SSB transmitted by the target access object within an SSB monitoring window configured in the first information.

The random access apparatus 1000 provided in the embodiment shown in FIG. 12 can trigger a target access object (one second access object) to transmit an SSB on demand (on-demand). Accordingly, preparation can be completed for performing RACH on the target access object, and the capacity of the network side is increased.

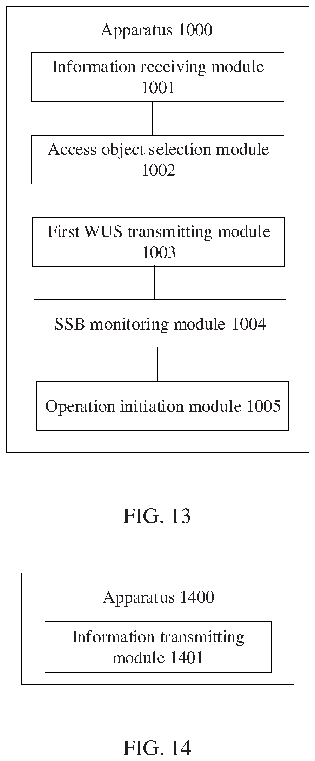

Optionally, as shown in FIG. 13, the random access apparatus 1000 according to the embodiments of the present application may further include:
an operation initiation module 1005, configured to initiate the first operation to the target access object.

Exemplarily, the target access object is one second access object, and the operation initiation module 1005 (a time point of initiating the first operation to the target access object) may specifically be configured to perform one of the following operations:
starting a second timer after transmission of the WUS to the target access object, and initiating the first operation to the target access object after expiration of the second timer (for example, initiating RACH, accordingly, the WUS may be the same WUS used for triggering SSB transmission and RACH monitoring, or may be the second WUS);
initiating the first operation to the target access object after A slots/symbols/milliseconds from transmitting the WUS to the target access object (for example, initiating RACH, accordingly, the WUS may be the same WUS used for triggering SSB transmission and RACH monitoring, or may be the second WUS); and
initiating the first operation to the target access object after B slots/symbols/milliseconds from receiving feedback for the WUS transmitted to the target access object (for example, initiating RACH, accordingly, the WUS may be the same WUS used for triggering SSB transmission and RACH monitoring, or may be the second WUS).

Optionally, the random access apparatus 1000 according to an embodiment of the present application may further include:
a second WUS transmitting module, configured to, transmit a wake-up signal WUS for the target access object again in a case that a second condition is satisfied.

The second condition may include but is not limited to at least one of the following:
(1) SSB detection failure;
(2) the number of random accesses reaches a maximum value;
   the number of WUS transmissions is less than or equal to a preset maximum transmission count;
(3) no feedback is received for a previous WUS;
(4) the previous WUS is used for triggering SSB transmission, and after receiving feedback for the previous WUS signal, a WUS used for triggering RACH monitoring is transmitted again (that is, the WUS is transmitted again to trigger RACH monitoring); and
(5) no feedback is received for the previous WUS before a timer expires.

Optionally, the WUS signal transmitted again has at least one of the following characteristics:
(1) increased signal power;
(2) a transmission time interval from the previous WUS greater than a preset time interval; and
(3) the same frequency-domain resources and sequence resources as the previous WUS.

As shown in FIG. 14, an embodiment of the present application provides a communication apparatus 1400, where the apparatus 1400 may include an information transmitting module 1401.

The information transmitting module 1401 is configured to transmit first information about a second access object group to UE via a first access object, where the second access object group includes one or more second access objects different from the first access object, the first information includes system information block SIB of the second access object, and the first information is used for selection, by the UE, of a target access object for performing a first operation, where the first operation includes camping or random access, and the access object includes one of a carrier, a cell, and a bandwidth part BWP.

The access object may include one of a carrier (carrier), a cell (cell), and a bandwidth part (Bandwidth Part, BWP). The random access method provided in the embodiments of the present application is applied to a multi-access object scenario, and the following mainly uses a multi-carrier scenario as an example for description.

In an implementation, in a multi-carrier scenario, the first access object may be an anchor carrier (anchor carrier), and the second access object may be a non-anchor carrier (non-anchor carrier). On the anchor carrier, the UE may obtain system information (system information) of the anchor carrier and necessary system information (necessary system information) of other non-anchor carriers. The UE may perform at least one of random access channel (Random Access Channel, RACH), data transmission, and data reception on ant anchor carrier and non-anchor carrier.

In another implementation, in a multi-carrier scenario, the first access object may be a carrier that normally transmits an SSB, and the second access object may be a carrier that abnormally transmits an SSB (SSB-less carrier).

The first information may be transmitted by the first access object via a broadcast message; or the first information is by default the same as corresponding information of the first access object.

System information of the second access object included in the first information includes at least one of the following:
all SIB or part of SIB of the second access object, where the part of SIB may include: public land mobile network (Public Land Mobile Network, PLMN) information, configuration information related to a cell selection (Cell selection) criterion, configuration information related to a cell reselection (Cell reselection) criterion, and at least one of cell bar (Cell bar) information; and
SIB1 status information of the second access object, where the SIB1 status information includes at least one of no transmission of SIB1 and SIB1 carried by system information of the first access object.

The first information corresponds to at least one second access object in the second access object group, and the first information further includes at least one of the following:
(1) WUS configuration information for triggering the at least one second access object to transmit an SSB, or WUS configuration information for triggering SSB adaptation of the at least one second access object, where the SSB includes at least one of a synchronization signal block and a physical broadcast channel block;
(2) WUS configuration information for triggering RACH monitoring of the at least one second access object, or WUS configuration information for triggering adaptation of RACH monitoring (RACH adaptation) of the at least one second access object;
(3) Related configuration information of SSB currently transmitted by the at least one second access object, specifically including at least one of the following:
   whether the at least one second access object is transmitting SSB;
   at least one of a frequency point of SSB being transmitted by the at least one second access object, an SSB transmission period, and the number of SSBs in one transmission period;
   a transmission mode of SSB being transmitted by the at least one second access object, the transmission mode including one of a normal transmission mode, an energy-saving transmission mode, a compact (compact, compact) transmission mode, a long-period transmission mode (with a long SSB transmission period), and an on-demand (on-demand) transmission mode, where the energy-saving transmission mode may be a simplified transmission mode that transmits only a primary synchronization signal (Primary Synchronization Signal, PSS) and a secondary synchronization signal (Secondary Synchronization Signal, SSS), and the compact transmission mode may be a mode with no time-domain gap (gap) between multiple SSBs.
(4) Related configuration information of a current RACH monitoring behavior of the at least one second access object, specifically including at least one of the following:
   whether the at least one second access object performs RACH monitoring;
   at least one of a transmission period of RACH being monitored by the at least one second access object, the number of RACHs in one transmission period, RACH frequency-domain resource configuration information, and RACH time-domain resource configuration information; and
   a monitoring mode for RACH monitoring performed by the at least one second access object, the monitoring mode including one of a normal monitoring mode, a simplified monitoring mode (for example, reduced RO opportunity (reduced RO opportunity)), a compact monitoring mode, and an on-demand (on-demand) monitoring mode, where the simplified monitoring mode may include reduced RO opportunity (reduced RO opportunity), and the compact monitoring mode may be a monitoring mode with no time-domain gap (gap) between multiple ROs, and RO is short for physical random access channel occasion (PRACH Occasion).
(5) Related configuration information of SSB transmitted upon successful WUS triggering, specifically including at least one of the following:
   upon successful WUS triggering, at least one of a frequency point of SSB transmitted by the at least one second access object, an SSB transmission period, and the number of SSBs in one transmission period;
   upon successful WUS triggering, a monitoring window for SSB transmitted by the at least one second access object, meaning that the UE monitors SSB within the monitoring window;
   upon successful WUS triggering, at least one time-domain resource index or at least one position of a time-domain resource where the at least one second access object actually transmits an SSB;
   upon successful WUS triggering, at least one of a transmission duration of SSB transmitted by the at least one second access object, the number of SSB transmissions, and the number of SSB transmission periods;
   upon successful WUS triggering, a relative relationship between SSB transmitted by the at least one second access object and SSB transmitted by the first access object in at least one of time domain, frequency domain, and spatial domain;
   upon successful WUS triggering, a time-domain resource position of a first SSB transmitted by the at least one second access object, for example, transmission in a nearest SSB period after X slots/symbols after a transmission time of the trigger signal (WUS); and
   upon successful WUS triggering, a transmission mode of SSB transmitted by the at least one second access object, the transmission mode including one of a normal transmission mode, an energy-saving transmission mode (for example, transmitting only PSS and SSS), a compact transmission mode (for example, no time-domain gap between multiple SSBs), a long-period transmission mode (with a relatively long SSB period), and an on-demand (on-demand) transmission mode.
(6) Related configuration information of RACH monitoring upon successful WUS triggering, specifically including:
   upon successful WUS triggering, at least one of a period for RACH monitoring performed by the at least one second access object, the number of RACHs to be monitored, monitored RACH frequency-domain resource configuration information, monitored RACH time-domain resource configuration information, and a monitoring mode for RACH monitoring, where the monitoring mode includes one of a normal monitoring mode, a simplified monitoring mode (for example, reduced RO opportunity), a compact monitoring mode (no time-domain gap between multiple ROs), and an on-demand monitoring mode.
(7) Feature information of the at least one second access object, specifically including at least one of the following:
   identification information of the at least one second access object;
   whether the at least one second access object can use the first access object as a reference access object;
   whether the at least one second access object is being co-located (co-located) with the first access object;
   whether the at least one second access object and the first access object belong to the same timing advance group (Timing Advance Group, TAG);
   whether the at least one second access object has a quasi co-location (Quasi Co Location, QCL) relationship with the first access object;
   a reference access object of the at least one second access object;
   an access object co-located with the at least one second access object;
   an access object belonging to the same TAG as the at least one second access object;
   an access object having a QCL relationship with the at least one second access object;
   whether the at least one second access object is in a bar bar state;
   a priority of the at least one second access object when the UE performs random access channel selection;
   whether the at least one second access object is set to a bar state for a first type of UE, where the first type includes at least one of reduced capability (Reduced Capability, RedCap), non-terrestrial network (Non-Terrestrial Network, NTN), and network energy saving (Network Energy Saving, NES) capability;
   a feature value N of a UE ID allowed to perform random access on the at least one second access object, for example, a UE with UE ID mod number of carriers = N may perform random access on the carrier;
   whether the at least one second access object supports UE camping;
   whether the at least one second access object is a suitable cell (suitable cell); and
   whether the at least one second access object supports cell selection and/or cell reselection.

The WUS configuration information included in the first information may include at least one of the following:
(1) Synchronization reference configuration information of WUS, specifically including at least one of the following:
   at least one of SSB, channel state information-reference signal (Channel State Information-Reference Signal, CSI-RS), and tracking reference signal (tracking reference signal, TRS) of the first access object; and
   GPS timing (GPS timing).
(2) Resource configuration information of WUS, specifically including at least one of the following:
   time-domain resource information;
   frequency domain resource information; and
   signal sequence configuration information, for example, preamble grouping, which may specifically indicate a preamble grouping index indicating that the group of preambles is used to trigger SSB of the at least one second access object.
(3) Power configuration information of WUS, specifically including at least one of the following:
   initial signal power;
   signal power ramping step.
(4) Repetition transmission configuration information of WUS, specifically including at least one of the following:
   a repetition count for a single signal transmission; and
   a maximum repetition count for channel transmission.
(5) Spatial-domain parameter configuration information of WUS, specifically including at least one of the following:
   a correspondence between the WUS and an SSB of the first access object;
   a correspondence between the WUS and an SSB of the at least one second access object; and
   a correspondence between the WUS and an SSB of the second access object group.
(6) Transmission timer configuration information of WUS. The timer is used to avoid excessively frequent WUS transmission. Generally, the timer is started after WUS transmission, and repeated WUS transmission is not allowed before the timer expires.

The form of the WUS signal includes at least one of the following:
a RACH;
Msg1;
a preamble (preamble) sequence;
a sounding reference signal (Sounding Reference Signal, SRS); and
a physical uplink control channel (Physical Uplink Control Channel, PUCCH).

The configuration manner of the resource configuration information of the WUS includes at least one of the following:
configuring a signal resource list in the first information, each element of the signal resource list corresponding one-to-one to an index of the second access object or the second access object group, one element in the signal resource list including one or more resources;
configuring a signal resource list in the first information, each element of the signal resource list explicitly corresponding to an index of the second access object or the second access object group;
configuring a candidate resource set in the first information, one or more resources in the candidate resource set corresponding to one resource number, one resource number corresponding to an index of one second access object or one second access object group, the resource number being determined according to at least one of time domain, frequency domain, and spatial domain; and
configuring one or more signal resources for the second access object or the second access object group in the first information.

The signal resources configured by the resource configuration information of the WUS include at least one of the following:
time-frequency resources that are the same as time-frequency resources of a common RACH on the first access object or the second access object group, that is, sharing the same time-frequency resources with the common RACH on the first access object;
time-frequency resources that are time-frequency resources of a dedicated RACH specially used for triggering SSB transmission and/or RACH monitoring on the first access object or the second access object group, where the time-frequency resources of the dedicated RACH may be completely different time-frequency resources from the common RACH on the first access object, or may be a part of the time-frequency resources of the common RACH on the first access object; and
time-frequency resources that are time-frequency resources of a dedicated SRS/PUCCH used for triggering SSB transmission and/or RACH monitoring on the first access object or the second access object group.

The grouping manner of the second access object group includes at least one of the following:
configured by a network-side device; and
specified by a protocol.

The grouping rule of the second access object group includes at least one of the following:
second access objects in the same band (band) form one group;
second access objects in the same band range form one group;
second access objects that are the same in at least one of initial BWP (Initial BWP), active BWP (active BWP), SSB, and SCS form one group;
second access objects with the same transmission mode form one group, where the transmission mode is related to at least one of the following: whether to transmit an SSB, whether to perform RACH monitoring, and whether to support on-demand SSB (on-demand SSB) transmission;
co-located second access objects form one group; and
second access objects with consistent SSB transmission periods form one group.

Optionally, the communication apparatus 1400 according to the embodiments of the present application may further include:
a first WUS receiving module, configured to receive a wake-up signal WUS in a case that the target access object belongs to the second access object group, that the first information includes WUS configuration information for triggering the at least one second access object to transmit an SSB or WUS configuration information for triggering SSB adaptation of the at least one second access object, and that the first information includes WUS configuration information for triggering random access channel RACH monitoring of the at least one second access object or WUS configuration information for triggering RACH monitoring adaptation of the at least one second access object, where the WUS is used for triggering at least one of transmission of SSB and monitoring of RACH by the target access object.

In one example, the WUS is transmitted by the UE in a case that a first condition is satisfied, where the first condition may include at least one of the following:
(1) the first access object is not a suitable cell;
(2) the target access object is a suitable cell;
(3) intra-frequency (intra-frequency) or inter-frequency (inter-frequency) measurement is performed on the target access object;
(4) the target access object is in a first energy-saving state, where the first energy-saving state includes at least one of no SSB transmission, no SIB transmission, no RACH monitoring, an energy-saving SSB (such as sparse SSB) transmission, an energy-saving SIB (such as sparse SIB) transmission, and energy-saving RACH monitoring (such as sparse RACH monitoring), and the energy-saving SSB includes one of a light SSB, a simplified SSB, a sparse SSB, and a long-period SSB;
(5) the UE is sensitive to access delay; and
(6) the UE is in a process of recovery from a link failure.

In another example, the wake-up signal WUS for the target access object is transmitted by the UE under the assumption that the target access object is in a second energy-saving state.

The second energy-saving state may include at least one of the following:
no SIB transmission, normal SSB transmission, and normal RACH monitoring;
no SIB transmission, no SSB transmission or energy-saving SSB transmission (for example, simplified SSB or sparse SSB), with the first access object as a reference, and normal RACH monitoring;
no SIB transmission, normal SSB transmission, and no normal RACH monitoring; and
no SIB transmission, no SSB transmission or energy-saving SSB transmission (for example, simplified SSB or sparse SSB), and no normal RACH monitoring.

In the first example, the first WUS receiving module is configured to receive, the target access object, one WUS, the WUS may be used for two purposes: triggering the target access object to transmit an SSB, and triggering the target access object to monitor RACH.

In the second example, the first WUS receiving module is configured to: the target access object receives a first WUS, where the first WUS is used for triggering the target access object to transmit an SSB; and the target access object receives a second WUS, where the second WUS is used for triggering the target access object to monitor RACH.

Exemplarily, the first WUS receiving module is configured to perform one of the following operations:
receiving a second WUS for the target access object transmitted by the UE after Z slots/symbols/milliseconds from transmitting the first WUS;
receiving a second WUS for the target access object transmitted by the UE after X slots/symbols/milliseconds from receiving feedback for the first WUS;
receiving a second WUS for the target access object transmitted by the UE when a transmission count of the first WUS reaches a maximum value; and
receiving a second WUS for the target access object transmitted by the UE after the first timer expires, where the first timer is started after transmission of the first WUS.

The communication method provided in the embodiments can trigger a second access object to transmit an SSB or perform RACH monitoring on demand (on-demand), instead of continuously transmitting SSB, continuously performing RACH monitoring, always not transmitting SSB, or always not performing RACH monitoring. Therefore, the network side capacity can be ensured to a maximum extent while energy saving is performed for the network-side device.

Optionally, a communication apparatus 1400 according to an embodiment of the present application may further include: a signal transmitting module, configured to transmit an SSB in a case that the WUS is used for triggering SSB transmission, so that the target access object transmits an SSB on demand (on-demand) under the triggering of the WUS. Accordingly, preparation can be completed for performing accessing on the target access object, and the capacity of the network side is increased.

Optionally, a communication apparatus 1400 according to an embodiment of the present application may further include: a monitoring module, configured to monitor the first operation initiated by the UE, for example, monitoring RACH initiated by the UE to the target access object.

Optionally, the communication apparatus 1400 according to an embodiment of the present application may further include:
a second WUS receiving module, configured to receive a wake-up signal WUS for the target access object transmitted again by the UE in a case that a second condition is satisfied, so as to improve the success rate of performing the first operation.

The second condition may include but is not limited to at least one of the following:
(1) SSB detection failure;
(2) the number of random accesses reaches a maximum value;
   the number of WUS transmissions is less than or equal to a preset maximum transmission count;
(3) no feedback is received for a previous WUS;
(4) the previous WUS is used for triggering SSB transmission, and after receiving feedback for the previous WUS signal, transmitting a WUS used for triggering RACH monitoring again (that is, transmitting a WUS again is to trigger RACH monitoring); and
(5) no feedback is received for the previous WUS before a timer expires.

Optionally, the WUS signal transmitted again has at least one of the following characteristics:
(1) increased signal power;
(2) a transmission time interval from the previous WUS greater than a preset time interval; and
(3) the same frequency-domain resources and sequence resources as the previous WUS.

It should be noted that the apparatus shown in FIG. 14 can implement the method shown in FIG. 9, with the same technical effects achieved. Therefore, the description is relatively simple, and for related parts, reference may be made to the description of the embodiment shown in FIG. 9 above.

It should be noted that the foregoing communication apparatus in this embodiment of the present application may be an electronic device, for example, an electronic device with an operating system, or may be a component in an electronic device, for example, an integrated circuit or a chip. The electronic device may be UE or may be another device except the UE. For example, the UE may include but is not limited to the types of the UE 11 listed above, and the another device may be a server, a network attached storage (Network Attached Storage, NAS), or the like, which are not specifically limited in the embodiments of the present application.

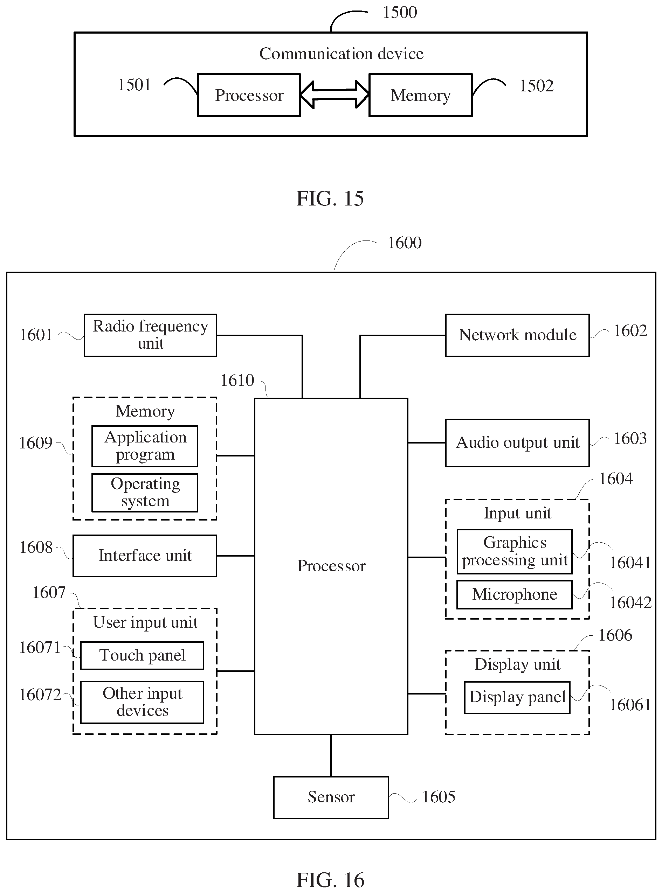

Optionally, as shown in FIG. 15, an embodiment of the present application further provides a communication apparatus 1500, including a processor 1501 and a memory 1502, where the memory 1502 stores a program or instructions capable of running on the processor 1501. For example, communication apparatuscommunication apparatuswhen the communication apparatus 1500 is a network-side device, the program or instructions are executed by the processor 1501 to implement the steps of the communication method embodiment described above, with the same technical effects achieved. To avoid repetition, details are not described herein again.

An embodiment of the present application further provides UE, including a processor and a communication interface, where the communication interface is configured to receive first information about a second access object group transmitted by a network-side device via a first access object, where the second access object group includes one or more second access objects different from the first access object, and the first information includes system information block SIB of the second access object; and the processor is configured to select, according to the first information and a first rule, a target access object for performing a first operation from the first access object and the second access object group, where the first operation includes camping or random access. This terminal embodiment corresponds to the foregoing method embodiment on the UE side. All implementations in the foregoing method embodiment may be applicable to this terminal embodiment, with the same technical effects achieved. Specifically, FIG. 16 is a schematic diagram of a hardware structure of UE for implementing embodiments of the present application.

The UE 1600 includes, but is not limited to, at least some of components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

Persons skilled in the art can understand that the UE 1600 may further include a power supply (for example, a battery) for supplying power to the components. The power supply may be logically connected to the processor 1610 via a power management system. In this way, functions such as charge management, discharge management, and power consumption management are implemented by using the power management system. The structure of the UE shown in FIG. 16 does not constitute any limitation on the UE. The UE may include more or fewer components than shown in the figure, or a combination of some components, or the components disposed differently. Details are not described herein again.

It should be understood that in this embodiment of the present application, the input unit 1604 may include a graphics processing unit (Graphics Processing Unit, GPU) 16041 and a microphone 16042. The graphics processing unit 16041 processes image data of a static picture or a video that is obtained by an image capture apparatus (for example, a camera) in a video capture mode or an image capture mode. The display unit 1606 may include a display panel 16061, and the display panel 16061 may be configured in a form of a liquid crystal display, an organic light-emitting diode, and the like. The user input unit 1607 includes at least one of a touch panel 16071 and other input devices 16072. The touch panel 16071 is also referred to as a touchscreen. The touch panel 16071 may include two parts: a touch detection apparatus and a touch controller. The other input devices 16072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 1601 may transmit the downlink data to the processor 1610 for processing. In addition, the radio frequency unit 1601 may transmit uplink data to the network-side device. Generally, the radio frequency unit 1601 includes but is not limited to an antenna, an amplifier, a transceiver, a coupler, a low noise amplifier, and a duplexer.

The memory 1609 may be configured to store software programs or instructions and various data. The memory 1609 may include first storage area for storing programs or instructions and a second storage area for storing data. The first storage area may store an operating system, an application program or instruction required by at least one function (for example, a sound playback function or an image playback function), and the like. In addition, the memory 1609 may include either a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1609 in this embodiment of the present application includes but is not limited to these and any other suitable types of memories.

The processor 1610 may include one or more processing units. Optionally, an application processor and a modem processor are integrated in the processor 1610. The application processor primarily processes operations relating to an operating system, user interfaces, application programs, and the like. The modem processor primarily processes radio communication signals, for example, being a baseband processor. It can be understood that the modem processor may alternatively be not integrated in the processor 1610.

The radio frequency unit 1601 may be configured to receive first information about a second access object group transmitted by a network-side device via a first access object, where the second access object group includes one or more second access objects different from the first access object, and the first information includes system information block SIB of the second access object.

The processor 1610 may be configured to select, according to the first information and a first rule, a target access object for performing a first operation from the first access object and the second access object group, where the first operation includes camping or random access, and the access object includes one of a carrier, a cell, and a bandwidth part BWP.

In this embodiment of the present application, the UE 1600 may select, according to a first rule and first information about a second access object group provided by a network-side device to the UE via a first access object, a target access object for camping or random access from the first access object and the second access object group, without a need for the second access object to continuously transmit information such as SSB and SIB. Therefore, the capacity of the network side can be ensured to a maximum extent while energy saving is performed for the network side.

An embodiment of the present application further provides a network-side device, including a processor and a communication interface, where the communication interface is configured to transmit first information about a second access object group to UE via a first access object, where the second access object group includes one or more second access objects different from the first access object, the first information includes system information block SIB of the second access object, and the first information is used for selection, by the UE, of a target access object for performing a first operation; where the first operation includes camping or random access. The network-side device embodiment corresponds to the foregoing network-side device method embodiment. All implementations in the foregoing method embodiment may be applicable to the network-side device embodiment, with the same technical effect achieved.

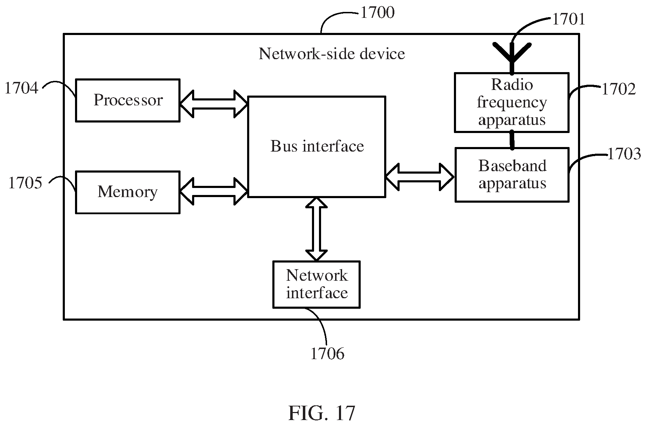

Specifically, an embodiment of the present application further provides a network-side device. As shown in FIG. 17, the network-side device 1700 includes: an antenna 1701, a radio frequency apparatus 1702, a baseband apparatus 1703, a processor 1704, and a memory 1705. The antenna 1701 is connected to the radio frequency apparatus 1702. In an uplink direction, the radio frequency apparatus 1702 receives information via the antenna 1701, and transmits the received information to the baseband apparatus 1703 for processing. In a downlink direction, the baseband apparatus 1703 processes to-be-sent information, and transmits the information to the radio frequency apparatus 1702; and the radio frequency apparatus 1702 processes the received information and then transmits the information using the antenna 1701.

The method performed by the network-side device in the foregoing embodiment may be implemented in the baseband apparatus 1703, and the baseband apparatus 1703 includes a baseband processor.

The baseband apparatus 1703 may include, for example, at least one baseband board, where a plurality of chips are disposed on the baseband board. As shown in FIG. 17, one of the chips is, for example, the baseband processor, and connected to the memory 1705 via a bus interface, to invoke the program in the memory 1705 to perform the operations of the network device shown in the foregoing method embodiment.

The network-side device may further include a network interface 1706, where the interface is, for example, a common public radio interface (common public radio interface, CPRI).

Specifically, the network-side device 1700 in this embodiment of the present invention further includes a program or instructions stored in the memory 1705 and capable of running on the processor 1704. The processor 1704 invokes the program or instructions in the memory 1705 to execute the methods executed by the modules shown in FIG. 14, with the same technical effect achieved. To avoid repetition, details are not described herein again.

An embodiment of the present application further provides a readable storage medium, where the readable storage medium stores a program or instructions, and when the program or instructions are executed by a processor, the processes of the foregoing random access method or communication method embodiment are implemented, with the same technical effects achieved. To avoid repetition, details are not described herein again.

The processor is a processor in the UE described in the foregoing embodiment. The readable storage medium includes a computer-readable storage medium such as a computer read-only memory ROM, a random access memory RAM, a magnetic disk, or an optical disk.

An embodiment of the present application further provides a chip, where the chip includes a processor and a communication interface, the communication interface is coupled to the processor, and the processor is configured to run a program or instructions to implement the processes of the foregoing random access method or communication method embodiment, with the same technical effects achieved. To avoid repetition, details are not described herein again.

It should be understood that the chip mentioned in this embodiment of the present application may also be referred to as a system-on-chip, a system chip, a system-on-a-chip, or a system on a chip, or the like.

An embodiment of the present application further provides a computer program/program product, where the computer program/program product is stored in a non-volatile storage medium, and the computer program/program product is executed by at least one processor to implement the processes of the foregoing random access method or communication method embodiments, with the same technical effects achieved. To avoid repetition, the details are not repeated herein.

An embodiment of the present application further provides a communication system, including UE and a network-side device, where the UE may be configured to execute the steps of the random access method as described in FIG. 2, and the network-side device may be configured to execute the steps of the communication method as described in FIG. 9.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of the present application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of the present application essentially or the part contributing to the prior art may be implemented in a form of a software product. The software product is stored in a storage medium (for example, a ROM/RAM, a magnetic disk, or an optical disk), and includes several instructions for instructing UE (which may be a mobile phone, a computer, a server, an air conditioner, a network device, or the like) to perform the methods described in the embodiments of the present application.

The foregoing describes the embodiments of the present application with reference to the accompanying drawings. However, the present application is not limited to the foregoing specific embodiments. The foregoing specific embodiments are merely illustrative rather than restrictive. As instructed by the present application, persons of ordinary skill in the art may develop many other manners without departing from principles of the present application and the protection scope of the claims, and all such manners fall within the protection scope of the present application.

## Claims

1. A random access method, wherein the method comprises:
receiving, by UE, first information about a second access object group transmitted by a network-side device via a first access object, wherein the second access object group comprises one or more second access objects different from the first access object, and the first information comprises system information block SIB of the second access object; and
selecting, by the UE according to the first information and a first rule, a target access object for performing a first operation from the first access object and the second access object group, wherein the first operation comprises camping or random access, and the access object comprises one of a carrier, a cell, and a bandwidth part BWP.

2. The method according to claim 1, wherein the system information block SIB of the second access object comprises at least one of the following:
all SIB or part of SIB of the second access object; and
system information block 1 SIB1 status information of the second access object, the SIB 1 status information comprising at least one of no transmission of SIB 1 and SIB 1 carried by system information of the first access object.

3. The method according to claim 1, wherein the first information corresponds to at least one second access object in the second access object group, and the first information further comprises at least one of the following:
wake-up signal WUS configuration information for triggering the at least one second access object to transmit an SSB, or WUS configuration information for triggering SSB adaptation of the at least one second access object, wherein the SSB comprises at least one of a synchronization signal block and a physical broadcast channel block;
WUS configuration information for triggering random access channel RACH monitoring of the at least one second access object, or WUS configuration information for triggering RACH monitoring adaptation of the at least one second access object;
related configuration information of SSB currently transmitted by the at least one second access object;
related configuration information of a current RACH monitoring behavior of the at least one second access object;
related configuration information of SSB transmitted upon successful WUS triggering;
related configuration information of RACH monitoring upon successful WUS triggering; and
feature information of the at least one second access object.

4. The method according to any one of claims 1 to 3, wherein the first rule is related to at least one of the following:
one or more access objects for the UE to perform random access, as indicated or configured by a network-side device;
an access object for the UE to perform random access being the first access object by default;
bar status information of the second access object;
an index value of the second access object;
a center frequency of the second access object;
a subcarrier spacing SCS of the second access object;
an identifier of the second access object;
a frequency interval between the second access object and the first access object;
whether the second access object performs normal RACH monitoring;
whether the second access object normally transmits an SSB;
whether the second access object supports normal RACH monitoring and normal transmission of SSB;
the number of WUS transmissions to be transmitted to the second access object;
a priority of the second access object;
a signal strength measurement value of a reference signal of the second access object, the signal strength comprising at least one of reference signal received power RSRP and signal to interference plus noise ratio SINR;
a randomly generated index of an access object;
a weight value of the second access object;
a randomly generated weight value of an access object;
whether the first access object is a suitable cell; and
whether the second access object is a suitable cell.

5. The method according to claim 1, wherein the selecting a target access object for performing a first operation from the first access object and the second access object group according to the first information and a first rule comprises:
determining whether the first access object is a suitable cell;
selecting the first access object as the target access object when the first access object is a suitable cell; and
performing a first step or a second step when the first access object is not a suitable cell; wherein
the first step comprises:
determining whether at least one second access object in the second access object group is a suitable cell, according to a reference signal measurement result corresponding to the at least one second access object and part SIB or all of SIB of the at least one second access object comprised in the first information; and
selecting, according to the first rule, one suitable cell as the target access object for performing the first operation from the at least one second access object in a case that one or more second access objects among the at least one second access object are suitable cells; and
the second step comprises:
ignoring the second access object, and searching for another suitable cell as the target access object for performing the first operation.

6. The method according to claim 5, wherein the searching for another suitable cell as the target access object for performing the first operation comprises:
searching for a suitable cell as the target access object for performing the first operation from one or more second access objects in the second access object group; and
searching for a suitable cell as the target access object for performing the first operation from one or more third access objects in a third access object group, wherein the third access object group comprises access objects in the second access object group that satisfy a third condition; wherein
the third condition comprises at least one of the following:
using the first access object as a reference;
being co-located with the first access object; and
being consecutive access objects on a same band as the first access object.

7. The method according to claim 1, wherein the selecting a target access object for performing a first operation from the first access object and the second access object group according to the first information and a first rule comprises:
determining whether the first access object is a suitable cell, according to a measurement result of SSB transmitted by the first access object and SIB of the first access object;
determining whether at least one second access object in the second access object group is a suitable cell, according to a reference signal measurement result corresponding to the at least one second access object and part SIB or all of SIB of the at least one second access object comprised in the first information; and
selecting, according to the first rule, one suitable cell as the target access object for performing the first operation from the first access object and the at least one second access object in a case that the first access object is a suitable cell and one or more second access objects among the at least one second access object are suitable cells.

8. The method according to claim 3, wherein the target access object belongs to the second access object group, the first information comprises wake-up signal WUS configuration information for triggering the at least one second access object to transmit an SSB, or WUS configuration information for triggering SSB adaptation of the at least one second access object, and the first information comprises WUS configuration information for triggering random access channel RACH monitoring of the at least one second access object, or WUS configuration information for triggering RACH monitoring adaptation of the at least one second access object; and the method further comprising:
transmitting, by the UE, a wake-up signal WUS for the target access object, wherein the WUS is used for triggering at least one of transmission of SSB and monitoring of RACH by the target access object.

9. The method according to claim 8, wherein the transmitting, by the UE, a wake-up signal WUS for the target access object comprises:
transmitting, by the UE, a WUS for the target access object in a case that a first condition is satisfied; wherein
the first condition comprises at least one of the following:
the first access object is not a suitable cell;
the target access object is a suitable cell;
intra-frequency or inter-frequency measurement is performed on the target access object;
the target access object is in a first energy-saving state, wherein the first energy-saving state comprises at least one of no SSB transmission, no SIB transmission, no RACH monitoring, transmission of an energy-saving SSB, transmission of an energy saving SIB, and energy-saving RACH monitoring, and the energy-saving SSB comprises one of a light SSB, a simplified SSB, a sparse SSB, and a long-period SSB;
the UE is sensitive to access delay; and
the UE is in a process of recovery from a link failure.

10. The method according to claim 8 or 9, wherein the transmitting, by the UE, a wake-up signal WUS for the target access object comprises:
transmitting, by the UE, a first WUS for the target access object, wherein the first WUS is used for triggering the target access object to transmit an SSB; and
transmitting, by the UE, a second WUS for the target access object, wherein the second WUS is used for triggering the target access object to monitor RACH.

11. The method according to claim 8, wherein the WUS is used for triggering the target access object to transmit an SSB, and the method further comprising:
monitoring, by the UE, SSB transmitted by the target access object.

12. The method according to claim 11, wherein the monitoring SSB transmitted by the target access object comprises one of the following:
starting a third timer after transmission of the WUS, and starting to monitor SSB transmitted by the target access object after expiration of the third timer;
starting to monitor SSB transmitted by the target access object after C slots/symbols/milliseconds after transmission of the WUS;
starting to monitor SSB transmitted by the target access object in a next slot after transmission of the WUS; and
monitoring SSB transmitted by the target access object within an SSB monitoring window configured in the first information.

13. The method according to claim 11, wherein the method further comprises:
initiating, by the UE, the first operation to the target access object.

14. The method according to claim 13, wherein the target access object is one second access object, and the initiating the first operation to the target access object comprises one of the following:
starting a second timer after transmission of the WUS to the target access object, and initiating the first operation to the target access object after expiration of the second timer;
initiating the first operation to the target access object after A slots/symbols/milliseconds after transmission of the WUS to the target access object; and
initiating the first operation to the target access object after B slots/symbols/milliseconds after receiving feedback for the WUS transmitted to the target access object.

15. A communication method, wherein the method comprises:
transmitting, by a network-side device, first information about a second access object group to UE via a first access object, wherein the second access object group comprises one or more second access objects different from the first access object, the first information comprises system information block SIB of the second access object, and the first information is used for selection, by the UE, of a target access object for performing a first operation, wherein the first operation comprises camping or random access, and the access object comprises one of a carrier, a cell, and a bandwidth part BWP.

16. The method according to claim 15, wherein the system information block SIB of the second access object comprises at least one of the following:
all SIB or part of SIB of the second access object; and
system information block 1 SIB1 status information of the second access object, the SIB 1 status information comprising at least one of no transmission of SIB1 and SIB1 carried by system information of the first access object.

17. The method according to claim 15, wherein the first information corresponds to at least one second access object in the second access object group, and the first information further comprises at least one of the following:
wake-up signal WUS configuration information for triggering the at least one second access object to transmit an SSB, or WUS configuration information for triggering SSB adaptation of the at least one second access object, wherein the SSB comprises at least one of a synchronization signal block and a physical broadcast channel block;
WUS configuration information for triggering random access channel RACH monitoring of the at least one second access object, or WUS configuration information for triggering RACH monitoring adaptation of the at least one second access object;
related configuration information of SSB currently transmitted by the at least one second access object;
related configuration information of a current RACH monitoring behavior of the at least one second access object;
related configuration information of SSB transmitted upon successful WUS triggering;
related configuration information of RACH monitoring upon successful WUS triggering; and
feature information of the at least one second access object.

18. The method according to claim 17, wherein the target access object belongs to the second access object group, the first information comprises wake-up signal WUS configuration information for triggering the at least one second access object to transmit an SSB, or WUS configuration information for triggering SSB adaptation of the at least one second access object, and the first information comprises WUS configuration information for triggering random access channel RACH monitoring of the at least one second access object, or WUS configuration information for triggering RACH monitoring adaptation of the at least one second access object; and the method further comprising:
receiving, by the target access object, a wake-up signal WUS, wherein the WUS is used for triggering at least one of transmission of SSB and monitoring of RACH by the target access object.

19. The method according to claim 18, wherein the WUS is transmitted by the UE in a case that a first condition is satisfied, and the first condition comprises at least one of the following:
the first access object is not a suitable cell;
the target access object is a suitable cell;
intra-frequency or inter-frequency measurement is performed on the target access object;
the target access object is in a first energy-saving state, wherein the first energy-saving state comprises at least one of no SSB transmission, no SIB transmission, no RACH monitoring, transmission of an energy-saving SSB, transmission of an energy saving SIB, and energy-saving RACH monitoring, and the energy-saving SSB comprises one of a light SSB, a simplified SSB, a sparse SSB, and a long-period SSB;
the UE is sensitive to access delay; and
the UE is in a process of recovery from a link failure.

20. The method according to claim 18 or 19, wherein the receiving a wake-up signal WUS for the target access object comprises:
receiving, by the target access object, a first WUS, wherein the first WUS is used for triggering the target access object to transmit an SSB; and
receiving, by the target access object, a second WUS, wherein the second WUS is used for triggering the target access object to monitor RACH.

21. The method according to claim 18, wherein the method further comprises:
monitoring, by the target access object, the first operation initiated by the UE.

22. A random access apparatus, wherein the apparatus comprises:
an information receiving module, configured to receive first information about a second access object group transmitted by a network-side device via a first access object, wherein the second access object group comprises one or more second access objects different from the first access object, and the first information comprises system information block SIB of the second access object; and
an access object selection module, configured to select, according to the first information and a first rule, a target access object for performing a first operation from the first access object and the second access object group, wherein the first operation comprises camping or random access.

23. The apparatus according to claim 22, wherein the first information corresponds to at least one second access object in the second access object group, and the first information further comprises at least one of the following:
wake-up signal WUS configuration information for triggering the at least one second access object to transmit an SSB, or WUS configuration information for triggering SSB adaptation of the at least one second access object, wherein the SSB comprises at least one of a synchronization signal block and a physical broadcast channel block;
WUS configuration information for triggering random access channel RACH monitoring of the at least one second access object, or WUS configuration information for triggering RACH monitoring adaptation of the at least one second access object;
related configuration information of SSB currently transmitted by the at least one second access object;
related configuration information of a current RACH monitoring behavior of the at least one second access object;
related configuration information of SSB transmitted upon successful WUS triggering;
related configuration information of RACH monitoring upon successful WUS triggering; and
feature information of the at least one second access object.

24. The apparatus according to claim 22, wherein the first rule is related to at least one of the following:
one or more access objects for the UE to perform random access, as indicated or configured by a network-side device;
an access object for the UE to perform random access being the first access object by default;
bar status information of the second access object;
an index value of the second access object;
a center frequency of the second access object;
a subcarrier spacing SCS of the second access object;
an identifier of the second access object;
a frequency interval between the second access object and the first access object;
whether the second access object performs normal RACH monitoring;
whether the second access object normally transmits an SSB;
whether the second access object supports normal RACH monitoring and normal transmission of SSB;
the number of WUS transmissions to be transmitted to the second access object;
a priority of the second access object;
a signal strength measurement value of a reference signal of the second access object, the signal strength comprising at least one of reference signal received power RSRP and signal to interference plus noise ratio SINR;
a randomly generated index of an access object;
a weight value of the second access object;
a randomly generated weight value of an access object;
whether the first access object is a suitable cell; and
whether the second access object is a suitable cell.

25. A communication apparatus, wherein the apparatus comprises:
an information transmitting module, configured to transmit first information about a second access object group to UE via a first access object, wherein the second access object group comprises one or more second access objects different from the first access object, the first information comprises system information block SIB of the second access object, and the first information is used for selection, by the UE, of a target access object for performing a first operation, wherein the first operation comprises camping or random access, and the access object comprises one of a carrier, a cell, and a bandwidth part BWP.

26. The apparatus according to claim 25, wherein the first information corresponds to at least one second access object in the second access object group, and the first information further comprises at least one of the following:
wake-up signal WUS configuration information for triggering the at least one second access object to transmit an SSB, or WUS configuration information for triggering SSB adaptation of the at least one second access object, wherein the SSB comprises at least one of a synchronization signal block and a physical broadcast channel block;
WUS configuration information for triggering random access channel RACH monitoring of the at least one second access object, or WUS configuration information for triggering RACH monitoring adaptation of the at least one second access object;
related configuration information of SSB currently transmitted by the at least one second access object;
related configuration information of a current RACH monitoring behavior of the at least one second access object;
related configuration information of SSB transmitted upon successful WUS triggering;
related configuration information of RACH monitoring upon successful WUS triggering; and
feature information of the at least one second access object.

27. UE, comprising a processor and a memory, wherein the memory stores a program or instructions executable on the processor, and the program or instructions, when executed by the processor, implement the steps of the random access method according to any one of claims 1 to 14.

28. A network-side device, comprising a processor and a memory, wherein the memory stores a program or instructions executable on the processor, and the program or instructions, when executed by the processor, implement the steps of the communication method according to any one of claims 15 to 21.

29. A readable storage medium, wherein the readable storage medium stores a program or instructions, and the program or instructions, when executed by a processor, implement the steps of the random access method according to any one of claims 1 to 14, or implement the steps of the communication method according to any one of claims 15 to 21.
